(19) Europäisches Patentamt
European Patent Office
Office européen des brevets

(11) **EP 3 846 560 B1**

(12) **EUROPEAN PATENT SPECIFICATION**

(45) Date of publication and mention
of the grant of the patent:
**05.07.2023 Bulletin 2023/27**

(21) Application number: **19862604.6**

(22) Date of filing: **04.09.2019**

(51) International Patent Classification (IPC):
**H04W 72/04** (2023.01)    **H04L 5/00** (2006.01)

(52) Cooperative Patent Classification (CPC):
**H04L 5/003; H04L 5/0035; H04L 5/0048;
H04L 5/0053; H04L 5/0094;** H04L 5/0005;
H04L 5/001; H04L 5/0051; H04L 27/2602;
H04L 27/261

(86) International application number:
**PCT/CN2019/104441**

(87) International publication number:
**WO 2020/057375 (26.03.2020 Gazette 2020/13)**

(54) **RESOURCE ALLOCATION METHOD AND COMMUNICATION DEVICE**

RESSOURCENZUTEILUNGSVERFAHREN UND KOMMUNIKATIONSVORRICHTUNG

PROCÉDÉ D'ATTRIBUTION DE RESSOURCES ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2018 CN 201811094962**

(43) Date of publication of application:
**07.07.2021 Bulletin 2021/27**

(73) Proprietor: HUAWEI TECHNOLOGIES CO., LTD.
**Shenzhen, Guangdong 518129 (CN)**

(72) Inventors:
• **LIU, Xianda**
**Shenzhen, Guangdong 518129 (CN)**
• **LIU, Kunpeng**
**Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 2 850 908      EP-A1- 3 641 251
EP-B1- 2 850 908      WO-A1-2016/089124
WO-A1-2018/164452      CN-A- 106 209 194
CN-A- 107 888 268

• QUALCOMM INCORPORATED: "Enhancement to
control signaling for NCJT", 3GPP DRAFT;
R1-1708791 ENHANCEMENT TO CONTROL
SIGNALING FOR NCJT, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANC , vol. RAN WG1, no. Hangzhou,
China; 20170515 - 20170519 14 May 2017
(2017-05-14), XP051273974, Retrieved from the
Internet:
URL:http://www.3gpp.org/ftp/Meetings_3GPP_
SYNC/RAN1/Docs/ [retrieved on 2017-05-14]

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**TECHNICAL FIELD**

This application relates to the field of communications technologies, and in particular, to a resource configuration method and a communications apparatus.

**BACKGROUND**

A multiple-input multiple-output (multiple-input multiple-output, MIMO) technology is widely applied to wireless communications systems due to a characteristic that the multiple-input multiple-output technology can improve communication quality. A main idea of the MIMO technology is to suppress channel fading in a codeword transmission process by using a plurality of transmit antennas disposed at a transmit end and a plurality of receive antennas disposed at a receive end, thereby improving communication quality.

In downlink transmission, information bits of downlink data sent by a base station (base station, BS) to a terminal device are usually coded and modulated by using a codeword (codeword, CW) as a unit, and rate matching needs to be performed on transmitted codewords, so that the information bits can bypass some specific time-frequency resources, that is, data is not mapped onto the some specific time-frequency resources. These specific time-frequency resources are usually used to send other information, and the base station usually needs to notify these specific time-frequency resources through signaling. For example, a resource of a zero-power channel state information reference signal (zero-power channel state information reference signal, ZP CSI-RS) may be notified, so that rate matching is performed on the transmitted codewords for the ZP CSI-RS to skip mapping the information bits to the corresponding time-frequency resource.

Therefore, in the prior art, before sending the downlink data to the terminal device, the base station first configures rate matching resources for the downlink data, for example, a resource set 1 to a resource set 3. The rate matching resources may be resources of a periodic type or an aperiodic type. Then, when the rate matching resources are configured as an aperiodic type, the base station selects some or all of the configured rate matching resources through downlink control information (downlink control information, DCI), to indicate, to the terminal device, a resource that is triggered in this transmission, that is, the base station does not map the information bits of the downlink data to the resource. For example, a field in the DCI indicates to trigger the rate matching resources, and one or more state values in the field may be used to trigger some of the rate matching resources. After receiving the DCI, the terminal device determines, by determining a state value indicated by the field, a rate matching resource corresponding to the downlink data scheduled through the DCI.

In a next generation wireless communications system, for example, in a 5th generation mobile communications (the 5th generation, 5G) system, there is a coordinated multipoint transmission/reception (coordinated multiple point transmission/reception, CoMP) scenario. In the CoMP scenario, a plurality of base stations may simultaneously send downlink data to a same terminal device, where the downlink data includes a plurality of codewords. Each base station may send different codewords to the terminal device. The codewords correspond to different modulation and coding schemes. For example, a base station A sends a codeword 0 to the terminal device, and a base station B sends a codeword 1 to the terminal device. In this case, when the base station sends DCI used to schedule the downlink data including the plurality of codewords, the DCI needs to indicate a rate matching resource corresponding to the codeword 0 and a rate matching resource corresponding to the codeword 1. Consequently, a quantity of bits of a field used to indicate rate matching resources in the DCI increases, and DCI overheads increase. QUALCOMM INCORPORATED: "Enhancement to control signaling for NCJT", 3GPP DRAFT; RI-1708791 ENHANCEMENT TO CONTROL SIGNALING FOR NCJT, 3RD GENERATION PARTNERSHIP PROJECT (3GPP), PDSCH RE describes mapping and resource allocation design for NCJT, assuming single DCI. EP3641251A1 which is a document according to Art. 53(2) EPC, discloses a method for receiving a downlink signal by a terminal in a wireless communication system. Specifically, the method comprises the steps of: receiving, from a network, information on at least two first-type reference signal port groups and information on at least two second-type reference signal port groups; and receiving, from at least two transmission points constituting the network, a downlink signal including at least two codewords by using the information on the at least two first-type reference signal port groups and the information on the at least two second-type reference signal port groups, wherein the at least two first-type reference signal port groups correspond to different transmission points and the at least two second-type reference signal port groups correspond to different codewords.

EP2850908A1 discloses Methods and apparatuses of determining radio link quality. A user equipment detects an out-of-synchronization condition corresponding to a first control channel, and monitors a second control channel in response to the detecting the out-of synchronization condition.

## SUMMARY

Embodiments of this application provide a resource configuration method and a communications apparatus, to reduce DCI overheads.

The invention is defined in the claims.

## BRIEF DESCRIPTION OF DRAWINGS

FIG. 1 is an architectural diagram of a wireless communications system according to an embodiment of this application;

FIG. 2 is a flowchart of an example of a method for indicating a rate matching resource of a transmission codeword in the prior art;

FIG. 3A is a network architecture diagram of a CoMP scenario according to an embodiment of this application;

FIG. 3B is a network architecture diagram of another CoMP scenario according to an embodiment of this application;

FIG. 3C is a network architecture diagram of another CoMP scenario according to an embodiment of this application;

FIG. 4 is a flowchart of a resource configuration method according to an embodiment of this application;

FIG. 5A(a) to FIG. 5A(c) are a schematic diagram of an example in which rate matching needs to be performed between both two codewords and a resource occupied by a same CSI-RS according to an embodiment of this application;

FIG. 5B(d) to FIG. 5B(f) are a schematic diagram of another example in which rate matching needs to be performed between both two codewords and a resource occupied by a same CSI-RS according to an embodiment of this application;

FIG. 6A is a schematic diagram of an example in which rate matching needs to be performed between two codewords and different resources according to an embodiment of this application;

FIG. 6B is a schematic diagram of another example in which rate matching needs to be performed between two codewords and different resources according to an embodiment of this application;

FIG. 7 is a schematic diagram of indicating, through DCI, a frequency domain resource of a PDSCH resource allocated to a terminal device A according to an embodiment of this application;

FIG. 8 is a flowchart of another resource configuration method according to an example useful for understanding the invention;

FIG. 9 is a flowchart of another resource configuration method example useful for understanding the invention;

FIG. 10 is a schematic structural diagram of a communications apparatus according to an embodiment of this application;

FIG. 11 is a schematic structural diagram of another communications apparatus according to an embodiment of this application;

FIG. 12 is a schematic structural diagram of another communications apparatus according to an embodiment of this application; and

FIG. 13 is a schematic structural diagram of another communications apparatus according to an embodiment of this application.

## DESCRIPTION OF EMBODIMENTS

To make the objectives, technical solutions and advantages of the embodiments of this application clearer, the following further describes the embodiments of this application in detail with reference to the accompanying drawings.

In the following, some terms of the embodiments of this application are described, to help a person skilled in the art have a better understanding.

(1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile station (mobile), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (which is also referred to as a "cellular" phone), a computer having a mobile terminal device, a portable, pocket-sized, handheld, computer built-in, or in-vehicle mobile apparatus, a smart wearable device, and the like. For example, the terminal device is a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device may be an information sensing device, for example, a barcode, radio frequency identification (radio frequency identification, RFID), a sensor, a global positioning system (global positioning system, GPS), or a laser scanner.

By way of example rather than limitation, in the embodiments of this application, the terminal device may alternatively be a wearable device. The wearable device may also be referred to as a wearable intelligent device, and is a general term of wearable devices such as glasses, gloves, watches, clothes, and shoes that are developed by applying wearable technologies in intelligent designs of daily wear. The wearable device is a portable device that is directly worn on a body or integrated into clothes or an accessory of a user. The wearable device not only is a hardware device, but also implements a powerful function through software support, data interaction, and cloud interaction. Generalized wearable intelligent devices include full-featured and large-size devices, such as smart watches or smart glasses, that can implement complete or partial functions without depending on smartphones; and devices, such as various smart bands or smart jewelry for monitoring physical signs, that focus on only one type of application function and need to work with other devices such as smartphones.

(2) A network device, for example, including a base station (such as an access point), may be a device that is in an access network and that communicates with a wireless terminal device through an air interface in one or more cells. The network device may be configured to mutually convert a received over-the-air frame and an internet protocol (IP) packet, and serve as a router between the terminal device and a rest portion of the access network, where the rest portion of the access network may include an IP network. The network device may further coordinate attribute management of the air interface. For example, the network device may include an evolved NodeB (NodeB, eNB, or e-NodeB, evolved Node B) in an LTE system or in LTE-A, or may include a next generation NodeB (next generation node B, gNB) in an NR system in a fifth generation (fifth generation, 5G) mobile communications technology, or may include a centralized unit (centralized unit, CU) and a distributed unit (distributed unit, DU) that are in a cloud radio access network (cloud radio access network, Cloud RAN) system. This is not limited in the embodiments of this application.

(3) A resource element (resource element, RE) includes one OFDM symbol in time domain and one subcarrier in frequency domain. The RE is a minimum unit for representing a resource.

(4) A resource in a radio communications system is usually described by using a physical resource block (physical resource block, PRB) pair or a PRB as a unit. In an NR system, one PRB pair includes two slots (slot) in time domain, that is, 14 orthogonal frequency division multiple access (Orthogonal Frequency Division Multiple, OFDM) symbols, and includes 12 subcarriers in frequency domain. One PRB pair includes two adjacent PRBs. In other words, one PRB includes 12 subcarriers in frequency domain, and includes one slot in time domain. A PRB is formed after resource mapping is performed on an RB. It may be understood that a time-frequency domain resource included in one PRB may vary with different radio communications systems. For example, in an LTE system, one PRB includes a time domain resource of two slots in time domain, and the time domain resource and a frequency domain resource of the PRB are not limited herein. A time-frequency resource allocation field in DCI may be used to indicate to allocate some time-frequency resources in a network resource, and the allocated time-frequency resources are used for current data transmission.

(5) Rate matching resource, where each rate matching resource may include one or more RBs, or one or more REs in one or more RBs, or one or more REs. One or more rate matching resources may be configured through higher layer signaling. When the one or more rate matching resources are configured through higher layer signaling, information about a time domain position of the one or more rate matching resources may be simultaneously indicated, or information about a time domain position of the one or more rate matching resources may not be indicated. The time domain position may be a mini-slot (Mini-Slot), a slot (slot), a subframe, a frame, and the like. A rate matching field in DCI may be used to indicate to enable some or all rate matching resources configured through higher layer signaling. Enabling some resources indicates that rate matching needs to be performed between current data transmission scheduled by using the DCI and resource elements (resource element, RE) occupied by the enabled resources, that is, time domain positions in which the some resources take effect are indicated by using the DCI. In addition, the technical terms "enable" and "trigger" in the embodiments of this application may be used interchangeably.

(6) A codeword (codeword) indicates a transport block formed after a transmit end modulates, encodes, and scrambles original information bits according to a predefined rule in a data transmission process. A base station needs to notify a maximum quantity of codewords. When the maximum quantity of codewords is greater than 1, a part or all of codewords in the maximum quantity of codewords need to be further indicated to be enabled during actual downlink data transmission, so that a terminal device is notified of a demodulation and decoding scheme based on which data demodulation is performed.

(7) The terms "system" and "network" in the embodiments of this application may be used interchangeably. "A plurality of" refers to two or more. In view of this, "a plurality of" may also be understood as "at least two" in the embodiments of this application. "At least two" may be understood as two or more, for example, two, three, or more. "At least one" may be understood as one or more, for example, one, two, or more. For example, including at least one means including one, two, or more, and does not limit what are included. For example, including at least one of A, B, and C may represent the following cases: A is included, B is included, C is included, A and B are included, A and C are included, B and C are included, or A, B, and C are included. Similarly, an understanding of a description such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, in the embodiments of this application, ordinal numbers such as "first" and "second" are used to distinguish between a plurality of objects, and are not intended to limit an order, a time sequence, a priority, or importance of the plurality of objects.

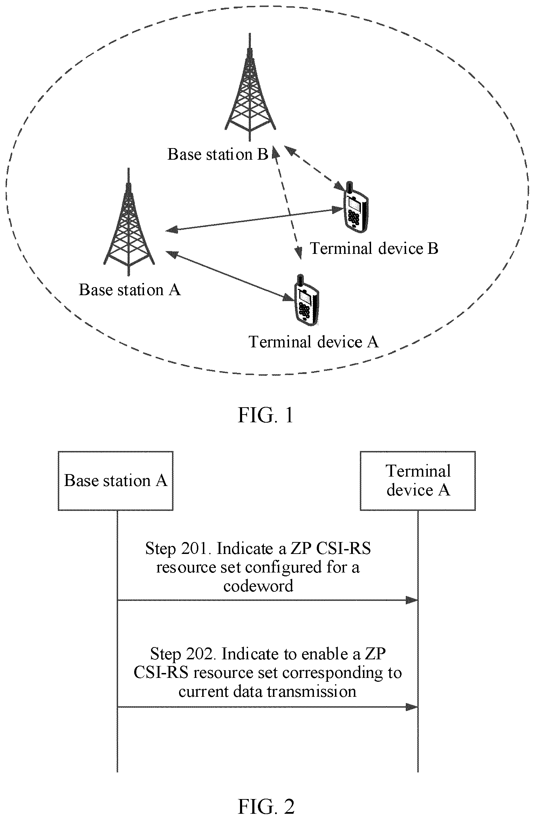

The foregoing describes some concepts related to the embodiments of this application. The following describes a method for indicating, by a base station, a rate matching resource used to transmit a codeword in the prior art. A radio communications system shown in FIG. 1 is used as an example. The radio communications system includes two base stations and two terminal devices. The two base stations are a base station A and a base station B, and the two terminal devices are a terminal device A and a terminal device B. The base station may separately communicate with two terminal devices at a same moment. For example, the base station A may simultaneously send different codewords to the terminal device A and the terminal device B. However, one terminal device communicates with only one base station at a same moment. For example, the terminal device A can receive only a codeword sent by the base station A at a first moment, and the terminal device A can receive only a codeword sent by the base station B at a second moment. In FIG. 1, a dashed line indicates that a codeword is sent at the second moment.

The following provides a description by using an example in which the base station A indicates, to the terminal device A, a rate matching resource used to transmit a codeword, and the rate matching resource is a ZP CSI-RS. Referring to FIG. 2, a procedure of a method is as follows:

Step 201. The base station A indicates, to the terminal device A, a ZP CSI-RS resource set used for rate matching, and the terminal device A receives indication information and obtains information about the ZP CSI-RS resource set.

Before sending a codeword to the terminal device A, the base station A first needs to configure a plurality of ZP CSI-RS resource sets for the codeword. For example, the base station A configures three ZP CSI-RS resource sets for the codeword, and each ZP CSI-RS resource set may include a plurality of ZP CSI-RS resources. A ZP CSI-RS resource set 1 is used as an example for description. As shown in FIG. 2, the ZP CSI-RS resource set 1 includes four ZP CSI-RS resources. The first ZP CSI-RS resource includes an OFDM symbol 2 and an OFDM symbol 3 in time domain, and includes a subcarrier 0 and a subcarrier 1 in frequency domain. The second ZP CSI-RS resource includes an OFDM symbol 6 and an OFDM symbol 7 in time domain, and includes the subcarrier 0 and the subcarrier 1 in frequency domain. The third ZP CSI-RS resource includes the OFDM symbol 2 and the OFDM symbol 3 in time domain, and includes a subcarrier 4 and a subcarrier 5 in frequency domain. The fourth ZP CSI-RS resource includes the OFDM symbol 6 and the OFDM symbol 7 in time domain, and includes the subcarrier 4 and the subcarrier 5 in frequency domain. For ZP CSI-RS resources included in the ZP CSI-RS resource set 2 and the ZP CSI-RS resource set 3, refer to those in the ZP CSI-RS resource set 1. Details are not described herein.

Then, the base station A sends a plurality of ZP CSI-RS resource sets and configuration information of a ZP CSI-RS resource in each ZP CSI-RS resource set to the terminal device A through higher layer signaling, for example, through radio resource control (radio resource control, RRC) signaling or media access control control element (media access control control element, MAC CE) signaling.

After receiving the higher layer signaling, the terminal device A determines the plurality of ZP CSI-RS resource sets configured by the base station A for current and subsequent downlink data transmission and the resource included in each ZP CSI-RS resource set.

Step 202. The base station A indicates, to the terminal device A, a ZP CSI-RS resource set corresponding to the current data transmission is enabled, and the terminal device A determines, based on the indicated ZP CSI-RS resource set, that data bits cannot be mapped onto some REs in time-frequency resources occupied in the current data transmission, where the some resources may be one or more PRBs, or may be one or more REs.

When transmitting the codeword to the terminal device A, the base station A may not enable all ZP CSI-RS resource sets for the current data transmission, but may enable only one resource set in the plurality of ZP CSI-RS resource sets. Therefore, the base station A further needs to indicate the enabled ZP CSI-RS resource set through DCI.

That the base station A configures three ZP CSI-RS resource sets is still used as an example. The base station A may use an indication field in the DCI to indicate the enabled ZP CSI-RS resource set. For example, the indication field is 2 bits, and different ZP CSI-RS resource sets are dynamically selected by indicating different state values of the indication field. As shown in Table 1, when a state value of the indication field is "00", the state value indicates that no ZP CSI-RS resource set is enabled, that is, data can be mapped onto all resources indicated by a resource allocation field. When a state value of the indication field is "01", the state value indicates that the ZP CSI-RS resource set 1 is enabled, that is, data bits cannot be mapped onto some resources that are in the time-frequency resources occupied in the current data transmission and that overlap with resources in the ZP CSI-RS resource set 1. When a state value of the indication field is "10", the state value indicates that the ZP CSI-RS resource set 2 is enabled, that is, data bits cannot be mapped onto some resources that are in the time-frequency resources occupied in the current data transmission and that overlap with resources in the ZP CSI-RS resource set 2. When a state value of the indication field is "11", the state value indicates that the ZP CSI-RS resource set 3 is enabled, that is, data bits cannot be mapped onto some resources that are in the time-frequency resources occupied in the current data transmission and that overlap with resources in the ZP CSI-RS resource set 3.

**Table 1**

| State value of indication field | Triggered ZP CSI-RS resource set |
|---|---|
| 00 | No ZP CSI-RS resource set |
| 01 | ZP CSI-RS resource set 1 |
| 10 | ZP CSI-RS resource set 2 |
| 11 | ZP CSI-RS resource set 3 |

The base station A may pre-configure in a protocol, or may indicate, through higher layer signaling or by using another field in the DCI, a correspondence between each state value in the indication field shown in Table 1 and an index value of the ZP CSI-RS resource set. In this way, after determining the state value of the indication field, the terminal device A determines the ZP CSI-RS resource set enabled in the current transmission.

To expand network edge coverage of a radio communications system and ensure quality of service (quality of service, QoS) of an edge terminal device, a CoMP scenario is provided in a 5G system.

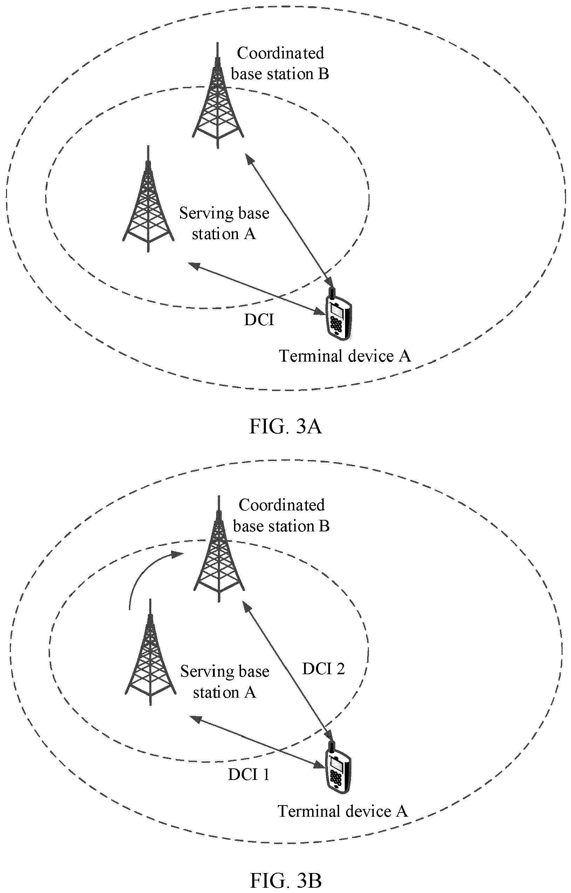

FIG. 3A is a network architecture diagram of a CoMP scenario. As shown in FIG. 3A, a plurality of base stations (that is, a base station A and a base station B) form a coordinating cluster, and simultaneously communicate with a terminal device (that is, a terminal device A). The base stations in the coordinating cluster are relatively close to each other, or are connected by using an optical fiber with a relatively small transmission loss, so that an interaction delay between the base stations in the coordinating cluster can be ignored. It may be considered that a serving base station (serving transmission reception point, serving TRP) exists in the base stations in the coordinating cluster, a function of the serving base station is to determine a scheduling decision for the terminal device that communicates with a base station in the coordinating cluster, for example, determine a physical downlink control channel (physical downlink control channel, PDCCH) resource, a physical downlink shared channel (physical downlink shared channel, PDSCH) resource, and a physical uplink shared channel (physical uplink shared channel, PUSCH) resource for the terminal device, send DCI on the PDCCH, and transmit data, a reference signal, or the like on the PUSCH/PDSCH. In the coordinating cluster, all base stations except the serving base station are referred to as coordinated base stations (coordinated TRP). A function of the coordinated base station is to communicate with the terminal device based on the scheduling decision of the serving base station. Alternatively, both the serving base station and the coordinated base station are controlled by one center controller. The center controller is configured to determine scheduling policies of the serving base station and the coordinated base station, and the serving base station sends control information to the terminal device. For example, DCI signaling is sent on a PDCCH determined by the serving base station, and data, a reference signal, or the like is sent on a PUSCH/PDSCH determined by the serving base station. In a 5G system, this scenario may also be referred to as ideal backhaul (ideal backhaul).

As shown in FIG. 3A, the base station A is a serving base station, and the base station B is a coordinated base station. The base station A or the center controller determines a scheduling decision for the terminal device A, and the base station A sends DCI to the terminal device A. The DCI may be used to indicate that the base station A is scheduled to communicate with the terminal device A, or may be used to indicate that both the base station A and the base station B are scheduled to communicate with the terminal device A. Alternatively, the radio communications system may simultaneously support two pieces of DCI. As shown in FIG. 3B, after a base station A or a center controller determines scheduling information for a terminal device A, the base station A may send DCI 1 to the terminal device A, and the base station B may send DCI 2 to the terminal device A. The terminal device A determines the scheduling information for the terminal device Abased on the DCI 1 and the DCI 2.

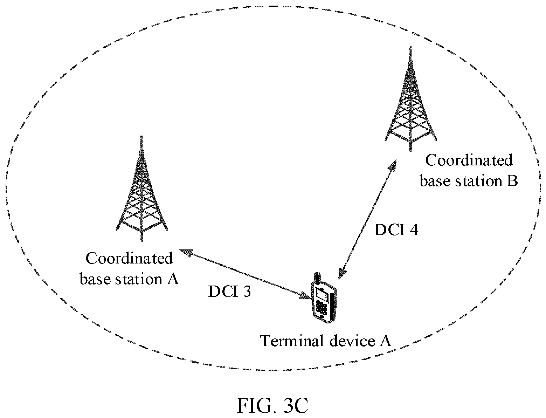

FIG. 3C is another network architecture diagram of a CoMP scenario. As shown in FIG. 3C, a distance between base stations in a coordinating cluster is relatively long or base stations in a coordinating cluster are connected by using a copper wire, and an interaction delay between the base stations is 2 ms to 5 ms or may even reach 50 ms. In this case, a plurality of coordinated base stations may independently determine a scheduling decision for a terminal device that communicates with a base station in the coordinating cluster, and each coordinated base station independently indicates DCI. The plurality of coordinated base stations exchange respective scheduling policies, and then determine, based on the scheduling policies of the plurality of coordinated base stations, a time to communicate with the terminal device. When the plurality of coordinated base stations simultaneously communicate with the terminal device based on their respective scheduling decisions, the terminal device simultaneously receives a plurality of pieces of DCI, and the plurality of pieces of DCI indicate a PDCCH, a PDSCH, a PUSCH, a reference signal, or the like of the coordinated base stations. In a 5G system, this scenario may also be referred to as non-ideal backhaul (non-ideal backhaul). As shown in FIG. 3C, after a base station A and a base station B determine, based on their respective scheduling policies, to simultaneously communicate with the terminal device A, the base station A sends DCI 3 to the terminal device A, and the base station B sends DCI 4 to the terminal device A. The terminal device A determines a scheduling policy of the base station A for the terminal device A based on the DCI 3, and the terminal device A determines a scheduling policy of the base station B for the terminal device A based on the DCI 4.

Assuming that the method for indicating a rate matching resource by a base station shown in FIG. 2 is applied to the communications system shown in FIG. 3A to FIG. 3C, overheads of the DCI used to indicate the triggered ZP CSI-RS resource set in step 202 increase and include redundant information.

A communications system shown in FIG. 3B is used as an example. A base station A and a base station B simultaneously communicate with a terminal device A. For example, the base station A sends a codeword 1 to the terminal device A, and the base station B sends a codeword 2 to the terminal device A. In this case, a ZP CSI-RS resource set needs to be configured for each codeword. For example, in the prior art, three ZP CSI-RS resource sets are configured for each codeword. In this case, ZP CSI-RS resource sets configured for the codeword 1 are a ZP CSI-RS resource set 1 to a ZP CSI-RS resource set 3, and ZP CSI-RS resource sets configured for the codeword 2 are a ZP CSI-RS resource set 4 to a ZP CSI-RS resource set 6.

For example, in the prior art, two bits of DCI are used to indicate a ZP CSI-RS resource set. To indicate the ZP CSI-RS resource sets triggered for the two codewords, two fields need to be used to indicate the ZP CSI-RS resource sets corresponding to the codeword 0 and the ZP CSI-RS resource sets corresponding to the codeword 1. As shown in Table 2, a state value of one of the fields indicates a ZP CSI-RS resource set corresponding to the codeword 0. When a state value of the indication field is "00", the state value indicates that no ZP CSI-RS resource set is triggered for rate matching of the codeword 0. When a state value of the indication field is "01", the state value indicates that the ZP CSI-RS resource set 1 is triggered for rate matching of the codeword 0. When a state value of the indication field is "10", the state value indicates that the ZP CSI-RS resource set 2 is triggered for rate matching of the codeword 0. When a state value of the indication field is "11", the state value indicates that the ZP CSI-RS resource set 3 is triggered for rate matching of the codeword 0. A state value of the other field indicates a triggered ZP CSI-RS resource set used for rate matching of the codeword 1, as shown in Table 3. A specific indication manner is similar to that of the codeword 0, and details are not described herein again.

**Table 2**

| State value of indication field | ZP CSI-RS resource set for codeword 0 |
| --- | --- |
| 00 | No ZP CSI-RS resource set |
| 01 | ZP CSI-RS resource set 1 |
| 10 | ZP CSI-RS resource set 2 |
| 11 | ZP CSI-RS resource set 3 |

**Table 3**

| State value of indication field | ZP CSI-RS resource set for codeword 1 |
| --- | --- |
| 00 | No ZP CSI-RS resource set |
| 01 | ZP CSI-RS resource set 4 |

(continued)

| State value of indication field | ZP CSI-RS resource set for codeword 1 |
|---|---|
| 10 | ZP CSI-RS resource set 5 |
| 11 | ZP CSI-RS resource set 6 |

Alternatively, an existing rate matching indication field in the DCI may be extended to 4 bits to indicate the ZP CSI-RS resource sets used for rate matching of the codeword 0 and the codeword 1. As shown in Table 4, when a state value of the indication field is "0000", the state value indicates that no ZP CSI-RS resource set is triggered for rate matching of the codeword 0 and the codeword 1. When a state value of the indication field is "0001", the state value indicates that the ZP CSI-RS resource set 1 is used for rate matching of the codeword 0 and the ZP CSI-RS resource set 4 is used for rate matching of the codeword 1. When a state value of the indication field is "0010", the state value indicates that the ZP CSI-RS resource set 1 is used for rate matching of the codeword 0 and the ZP CSI-RS resource set 5 is used for rate matching of the codeword 1. When a state value of the indication field is "0011", the state value indicates that the ZP CSI-RS resource set 1 is used for rate matching of the codeword 0 and the ZP CSI-RS resource set 6 is used for rate matching of the codeword 1. When a state value of the indication field is "1010", the state value indicates that the ZP CSI-RS resource set 1 is used for rate matching of the codeword 0 and no ZP CSI-RS resource set is used for rate matching of the codeword 1. When a state value of the indication field is "1011", the state value indicates that no ZP CSI-RS resource set is used for rate matching of the codeword 0, and the ZP CSI-RS resource set 4 is used for rate matching of the codeword 1; and so on.

**Table 4**

| State value of indication field | ZP CSI-RS resource set for codeword 0 and ZP CSI-RS resource set for codeword 1 |
|---|---|
| 0000 | No ZP CSI-RS resource set |
| 0001 | ZP CSI-RS resource set 1, ZP CSI-RS resource set 4 |
| 0010 | ZP CSI-RS resource set 1, ZP CSI-RS resource set 5 |
| 0011 | ZP CSI-RS resource set 1, ZP CSI-RS resource set 6 |
| 0100 | ZP CSI-RS resource set 2, ZP CSI-RS resource set 4 |
| 0101 | ZP CSI-RS resource set 2, ZP CSI-RS resource set 5 |
| 0110 | ZP CSI-RS resource set 2, ZP CSI-RS resource set 6 |
| 0111 | ZP CSI-RS resource set 3, ZP CSI-RS resource set 4 |
| 1000 | ZP CSI-RS resource set 3, ZP CSI-RS resource set 5 |
| 1001 | ZP CSI-RS resource set 3, ZP CSI-RS resource set 6 |
| 1010 | ZP CSI-RS resource set 1, N/A |
| 1011 | N/A, ZP CSI-RS resource set 4 |
| ... | ... |

In addition, when transmission of a plurality of base stations is supported, the DCI further needs to indicate whether mapping of information bits of a codeword is performed on an RE used by a coordinated base station to perform interference measurement, and whether mapping of information bits of a codeword is performed on an RE used to carry a phase tracking reference signal (phase tracking reference resource, PT-RS) used for channel estimation. In this case, a quantity of rate matching resource sets needing to be configured needs to be further increased. Consequently, a quantity of bits of the indication field in the DCI is further increased.

Therefore, if the prior-art method for indicating a rate matching resource used to transmit a codeword is applied to the communications system shown in FIG. 3A to FIG. 3C, DCI overheads are high, and redundant information exists in the foregoing indication. For example, two or more independent fields are used to indicate information about rate matching resources of codewords sent by base stations. In addition, rate matching resources of a plurality of codewords may have an overlapping part, that is, rate matching needs to be performed between all the plurality of codewords and some resources. For example, rate matching needs to be performed between all the plurality of codewords and data or a reference signal, of another user, that has relatively strong transmit power and that cannot perform spatial multiplexing with the plurality of codewords. In addition, the rate matching resources of the plurality of codewords may have a non-overlapping part, that is, rate matching needs to be performed between a part of codewords in the plurality of codewords and a resource. For example, when the resource is used to measure interference, the part of codewords can be transmitted on the resource, but other codewords cannot be transmitted on the resource. For another example, when the resource is used for channel measurement and a reference signal to be sent on the resource can be orthogonally transmitted with the part of codewords, the part of codewords can be transmitted on the resource, but other codewords cannot be transmitted on the resource.

In view of this, the embodiments of this application provide a resource configuration method, to reduce DCI overheads.

The technical solutions in the embodiments of this application may be applied to various communications systems, for example, a new radio (new radio, NR) system, an LTE system, a long term evolution-advanced (long term evolution-advanced, LTE-A) system, a worldwide interoperability for microwave access (worldwide interoperability for microwave access, WiMAX) system, or a wireless local area network (wireless local area networks, WLAN) system.

In addition, the communications systems may be further applicable to a future-oriented communications technology. The systems described in the embodiments of this application are intended to describe the technical solutions in the embodiments of this application more clearly, and constitute no limitation on the technical solutions provided in the embodiments of this application. A person of ordinary skill in the art may learn that, with evolution of network architectures, the technical solutions provided in the embodiments of this application are also applicable to a similar technical problem.

FIG. 3A to FIG. 3C show three application scenarios of the embodiments of this application. The three application scenarios have been described above, and details are not described herein again.

It should be noted that quantities and types of base stations and terminal devices included in the communications system shown in FIG. 3A to FIG. 3C are merely examples, and this is not limited in the embodiments of this application. For example, more base stations or more terminal devices that communicate with the base station may be further included. For brevity, details are not described in the accompanying drawings. In addition, although the base station and the terminal device are shown in the communications system shown in FIG. 3A to FIG. 3C, the communications system may not be limited to including the base station and the terminal device, for example, may further include a core network device or a device configured to bear a virtualized network function. These are clear to a person of ordinary skill in the art, and details are not described herein.

The following describes the technical solutions provided in the embodiments of this application with reference to the accompanying drawings.

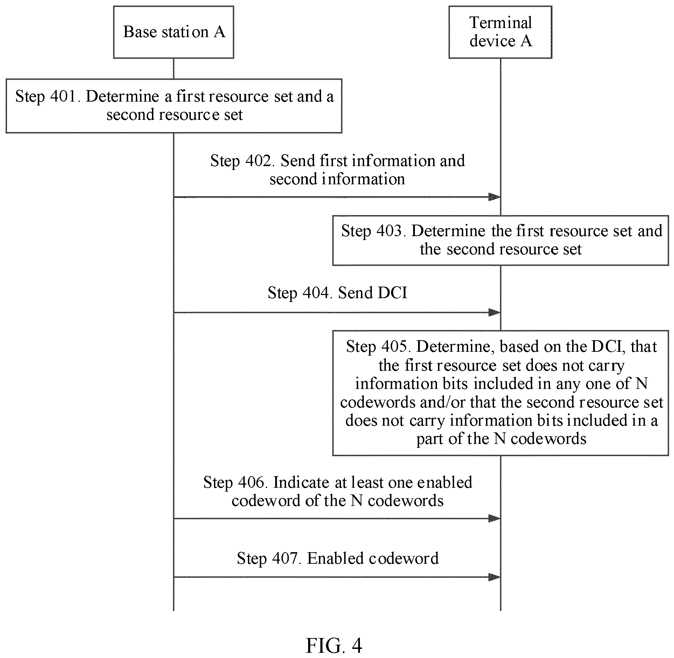

FIG. 4 is a flowchart of a resource configuration method according to this application. The following description uses an example in which the method according to this embodiment of this application is applied to the application scenario shown in FIG. 3A and the method is performed by the base station and the terminal device in the application scenario shown in FIG. 3A. For example, the method may be performed by a serving base station and a terminal device. In the application scenario shown in FIG. 3A, the serving base station is the base station A, and the terminal device is the terminal device A. Alternatively, the method may be performed by a serving base station, a coordinated base station, and a terminal device together. In the following description, an example in which the serving base station and the terminal device A, that is, the base station A and the terminal device A, perform the method is used for description. The flowchart is described as follows.

Step 401. The base station A determines a first resource set and a second resource set.

In this embodiment of this application, the first resource set does not carry information bits included in any one of N codewords, and the second resource set does not carry information bits included in a part of the N codewords, where N is an integer greater than or equal to 2.

In this embodiment of this application, that the first resource set does not carry information bits included in any one of N codewords specifically includes: When a resource used to carry the any one of the N codewords overlaps with any resource element RE in the first resource set, the overlapped RE does not carry the information bits included in the any one of the N codewords. This may be understood as that REs in the first resource set are a set of resources on which information bits in none of the N codewords are carried. That the second resource set does not carry information bits included in a part of the N codewords specifically includes: When a resource, in a resource set, used to carry the part of the N codewords overlaps with any RE in the second resource set, the overlapped RE does not carry the information bits included in the part of the N codewords. This may be understood as that resources in the second resource set are resources on which the information bits in the part of the codewords are not carried and resources, in the second resource set, on which information bits in the other part of the codewords may be carried. The N codewords may be understood as all codewords configured by the base station, that is, the first resource set corresponds to all the codewords. The N codewords may also be understood as all codewords enabled by the base station.

It should be noted that there may be one or more first resource sets and second resource sets. For ease of description, in the following description, an example in which there is one first resource set and one second resource set is used. The any RE in the first resource set may also be understood as any resource unit in the first resource set. The resource unit may be an RE, a combination of a plurality of REs, an RB, or the like. Details are not described herein. The any RE in the second resource set may also be understood in the same way, and details are not described herein again.

In this embodiment of this application, types of the resources in the first resource set and the second resource set are the same. For example, the resources in the first resource set and the second resource set may be some or all of resources occupied by non-zero-power CSI-RSs (non-zero-power CSI-RS, NZP CSI-RS) used for downlink channel estimation of a terminal device and used for channel measurement or beam measurement, or may be some or all resources occupied by a non-zero-power or zero-power CSI-RS (zero-power CSI-RS, ZP CSI-RS) used for interference measurement, or may be some or all resources occupied by a common reference signal, and a rate matching resource may be configured as a ZP CSI-RS resource. For ease of description, in the following description, an example in which the resources in the first resource set and the second resource set are ZP CSI-RS resources is used.

It should be noted that the N codewords are all codewords that may be transmitted by a base station to a terminal device in a communications system used in the method, but a specific quantity of codewords used during actual data transmission needs to be further notified. For example, the communications system shown in FIG. 3A includes the base station A and the base station B. The base stations may simultaneously transmit a codeword to the terminal device A at a same moment. A value of N may be 2. In the communications system shown in FIG. 3A, a quantity of base stations is merely an example. When the communications system includes four, five, or six base stations, the value of N may be 4, 5, or 6. In this embodiment of this application, the value of N is not limited. For ease of description, in the following description, an example in which N is 2 is used. The two codewords are a codeword 0 and a codeword 1. Therefore, it may be understood that the first resource set is a resource set common to the two codewords, and the second resource set is a resource set dedicated to the codeword 0 or the codeword 1.

The following describes a method for determining a resource set common to two codewords and a method for determining a resource set dedicated to the two codewords.

The base station A may determine, based on one or more of the following several cases, a resource in the resource set common to the two codewords:

Case a: The base station A and the base station B may simultaneously communicate with a plurality of terminal devices, and a CSI-RS that is used for channel measurement and that is of another terminal device is usually a reference signal on which beamforming (beamforming) is not performed, or a reference signal on which accurate beamforming is not performed. Therefore, strong mutual interference exists between the codewords sent by the base station A and the base station B to the terminal device A and the CSI-RS that is used for channel measurement and that is of the another terminal device. Therefore, to ensure communication quality, rate matching needs to be performed between both the two codewords and a resource occupied by the CSI-RS that is used for channel measurement and that is of the another terminal device. In other words, the resource occupied by the CSI-RS that is used for channel measurement and that is of the another terminal device does not carry information bits of any one of the two codewords, and a bandwidth occupied by the reference signal includes bandwidths occupied by the codewords scheduled by both the base station A and the base station B.

Case b: Resources for communication between the base station A and a terminal device and between the base station B and the terminal device include a resource of a reference signal used for channel state information interference measurement (channel state information interference measurement, CSI-IM) in which interference from another user is measured. Therefore, to ensure accuracy of interference measurement performed by the terminal device that accesses the communications system, rate matching needs to be performed between both the two codewords and the resource occupied by the reference signal used for CSI-IM. That is, the resource occupied by the reference signal used for CSI-IM does not carry information bits of any one of the two codewords, and a bandwidth occupied by the reference signal includes bandwidths occupied by the codewords scheduled by both the base station A and the base station B.

Case c: When resources occupied by a plurality of CSI-RSs used for beam management are configured to be in an on (on) state, that is, when a terminal device in the communications system fixes a receive beam of the terminal device on the resources occupied by the plurality of CSI-RSs used for beam management, and receives a CSI-RS sent by a base station by using a plurality of transmit beams, considering that rate matching needs to be performed between a resource occupied by a same CSI-RS and both the two codewords in the following two scenarios, a bandwidth occupied by the reference signal includes bandwidths occupied by the codewords scheduled by both the base station A and the base station B:

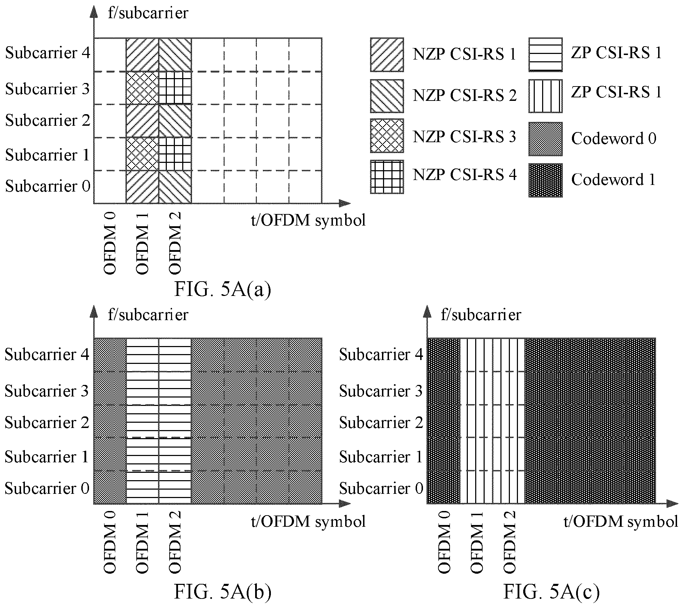

Scenario 1: The base station A and the base station B transmit codewords to the terminal device A while performing beam training. Because two beams from one antenna panel cannot be simultaneously used, when a transmit beam in beam training and a transmit beam of a codeword come from an antenna panel of a same base station, rate matching needs to be performed between both the two codewords and a resource occupied by a same CSI-RS. FIG. 5A(a) shows resources occupied by NZP CSI-RS resource sets. An example in which the resources are REs is used. An NZP CSI-RS resource set 1 and an NZP CSI-RS resource set 2 are sent by the base station A by using different transmit beams, and an NZP CSI-RS resource set 3 and an NZP CSI-RS resource set 4 are sent by the base station B by using different transmit beams. As shown in FIG. 5A(a) to FIG. 5A(c), an OFDM symbol occupied by REs included in the NZP CSI-RS resource set 1 is OFDM 1, and occupied subcarriers are a subcarrier 0, a subcarrier 2, and a subcarrier 4. An OFDM symbol occupied by REs included in the NZP CSI-RS resource set 2 is OFDM 2, and occupied subcarriers are the subcarrier 0, the subcarrier 2, and the subcarrier 4. An OFDM symbol occupied by REs included in the NZP CSI-RS resource set 3 is OFDM 1, and occupied subcarriers are a subcarrier 1 and a subcarrier 3. An OFDM symbol occupied by REs included in the NZP CSI-RS resource set 4 is OFDM 2, and occupied subcarriers are the subcarrier 1 and the subcarrier 3. Because different beams cannot come from a same antenna panel, a codeword 0 cannot be transmitted on the OFDM symbols at which the NZP CSI-RS resource set 1 and the NZP CSI-RS resource set 2 are located, and a codeword 1 cannot be transmitted on the OFDM symbols at which the NZP CSI-RS resource set 3 and the NZP CSI-RS resource set 4 are located. Because the OFDM symbol occupied by the NZP CSI-RS resource set 1 is OFDM 1, and the OFDM symbol occupied by the NZP CSI-RS resource set 2 is OFDM 2, the codeword 0 cannot be sent on the REs corresponding to OFDM 1 and OFDM 2, so that REs actually occupied by transmission of the codeword 0 are those shown in FIG. 5A(b) are obtained. Similarly, REs actually occupied by transmission of the codeword 1 are those shown in FIG. 5A(c) are obtained. It can be learned from FIG. 5A(b) and FIG. 5A(c) that a resource for performing rate matching with the codeword 0 is the same as a resource for performing rate matching with the codeword 1.

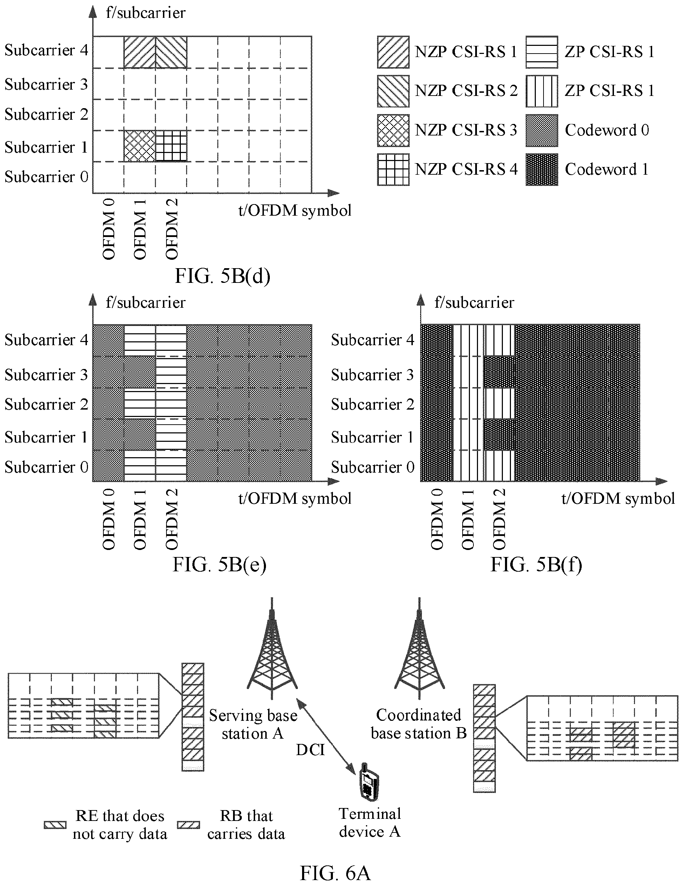

Scenario 2: The base station A and the base station B transmit codewords to the terminal device A while performing beam training. When a receive beam in beam training is the same as a receive beam of a codeword, FIG. 5B(d) shows REs occupied by an NZP CSI-RS resource 1 to an NZP CSI-RS resource 4. The NZP CSI-RS 1 and the NZP CSI-RS 3 are sent by the base station A by using different transmit beams and are received by the terminal device A by using a same receive beam, and the receive beam is the same as a receive beam of a codeword 0. The NZP CSI-RS 2 and the NZP CSI-RS 4 are sent by the base station B by using different transmit beams and are received by the terminal device A by using a same receive beam, and the receive beam is the same as a receive beam of the codeword 1. Because receive beams of a plurality of signals are the same at a same moment, the plurality of signals may be simultaneously received. In this case, only REs occupied by the NZP CSI-RSs need to be bypassed for the two codewords, to ensure CSI-RS and codeword receiving performance. In this way, REs actually occupied by transmission of the codeword 0 in FIG. 5B(e) and REs actually occupied by transmission of the codeword 1 in FIG. 5B(f) are obtained. It can be learned from FIG. 5B(e) and FIG. 5B(f) that, all resources on which rate matching is performed with the codeword 0 include REs corresponding to an OFDM symbol OFDM 1 whose subcarrier numbers are a subcarrier 0, a subcarrier 2, and a subcarrier 4, and REs corresponding to an OFDM symbol OFDM 2 whose subcarrier numbers are the subcarrier 0, the subcarrier 2, and the subcarrier 4.

It should be noted that, in this case, the terminal device A needs to assume that a rule for performing rate matching with an NZP CSI-RS resource configured by a base station for the terminal device A may be satisfied, that is, the terminal device assumes that REs occupied by PDSCH transmission bypass all NZP CSI-RSs configured for the terminal device and ZP CSI-RS resource sets used for rate matching and indicated by the base station. Alternatively, a rule for performing rate matching with an NZP CSI-RS resource configured by a base station for the terminal device A is not satisfied, that is, the terminal device does not assume in advance that REs occupied by PDSCH transmission bypass all NZP CSI-RSs configured for the terminal device, and the terminal device determines, based on ZP CSI-RS resource sets used for rate matching and indicated by the base station, whether the NZP CSI-RSs configured for the terminal device require rate matching. It may be understood that, when the base station configures the first resource set and the second resource set, when receiving data, the terminal device does not assume in advance that rate matching is performed between the data and a non-zero-power CSI-RS that is indicated by the base station to the terminal device. Specifically, when the non-zero-power CSI-RS completely or partially overlaps with REs occupied by the enabled first resource set and second resource set, rate matching needs to be performed between the data and the REs that are completely or partially overlapped; when the non-zero-power CSI-RS does not overlap with REs occupied by the enabled first resource set and second resource set, rate matching does not need to be performed between the data and the non-zero-power CSI-RS. A manner in which the base station indicates the non-zero-power CSI-RS may be: configuring a periodic CSI-RS through higher layer signaling, or further activating a semi-persistent CSI-RS through a MAC CE, or further indicating an enabled aperiodic CSI-RS through DCI.

It should be noted that, when data transmission is scheduled by using two pieces of DCI, rate matching is separately performed between an enabled codeword indicated by each piece of DCI and an enabled aperiodic non-zero-power CSI-RS indicated by the piece of DCI. For example, when the first piece of DCI indicates to enable a codeword 0 and an aperiodic NZP CSI-RS set 1 for rate matching, and the second piece of DCI indicates to enable a codeword 1 and an aperiodic NZP CSI-RS set 2 for rate matching, for the codeword 0, rate matching is performed by using the NZP CSI-RS set 1 indicated by the first piece of DCI, but rate matching is not performed by using the NZP CSI-RS set 2; and for the codeword 1, rate matching is performed by using the NZP CSI-RS set 2 indicated by the second piece of DCI, but rate matching is not performed by using the NZP CSI-RS set 2.

The base station A may determine, based on one or more of the following several cases, a resource in the resource set dedicated to the two codewords:

Case d: For a CSI-IM reference signal, when the serving base station needs to measure interference from the coordinated base station, a codeword of the coordinated base station may be sent on a resource occupied by the CSI-IM reference signal, but a codeword of the serving base station cannot be sent on the resource occupied by the CSI-IM reference signal. In other words, the resource occupied by the CSI-IM reference signal can be used to carry information bits of the codeword sent by the base station B, but the resource cannot be used to carry information bits of the codeword sent by the base station A. Consequently, rate matching needs to be performed between the two codewords and different resources.

Case e: Generally, transmission channels between base stations in a coordinating cluster have an orthogonal relationship or an approximately orthogonal relationship, and a channel correlation between orthogonal beams is lower. Therefore, in the coordinating cluster, interference between a codeword sent by one base station and a reference signal sent by another base station is smaller. However, channels used to send different signals in one base station have a non-orthogonal relationship, and a channel correlation between non-orthogonal beams is higher, causing larger interference. Therefore, a resource occupied by a reference signal on which precise precoding weighting is performed and that is configured for the serving base station (that is, the base station A) cannot be used to carry information bits of the codeword sent by the serving base station (that is, the base station A), but the resource may be used to carry information bits of the codeword sent by the coordinated base station (that is, the base station B). The reference signal on which precise precoding weighting is performed may be a CSI-RS or the like used for CSI feedback, and examples are not listed one by one herein. Referring to FIG. 6A, RBs allocated by the base station A to the base station A and the base station B for codeword transmission are the same, for example, an RB 1 to an RB 3 and an RB 5 to an RB 9. In addition, in each RB, REs corresponding to an OFDM symbol OFDM 2 and subcarriers whose numbers are a subcarrier 1, a subcarrier 3, and a subcarrier 5, and REs corresponding to an OFDM symbol OFDM 4 and subcarriers whose numbers are a subcarrier 0, a subcarrier 2, and a subcarrier 4 are not used to carry information bits of the codeword sent by the base station A; and REs corresponding to an OFDM symbol OFDM 2 and subcarriers whose numbers are a subcarrier 0, a subcarrier 1, a subcarrier 4, and a subcarrier 5, and REs corresponding to an OFDM symbol OFDM 4 and subcarriers whose numbers are a subcarrier 2 to the subcarrier 5 are not used to carry information bits of the codeword sent by the base station B.

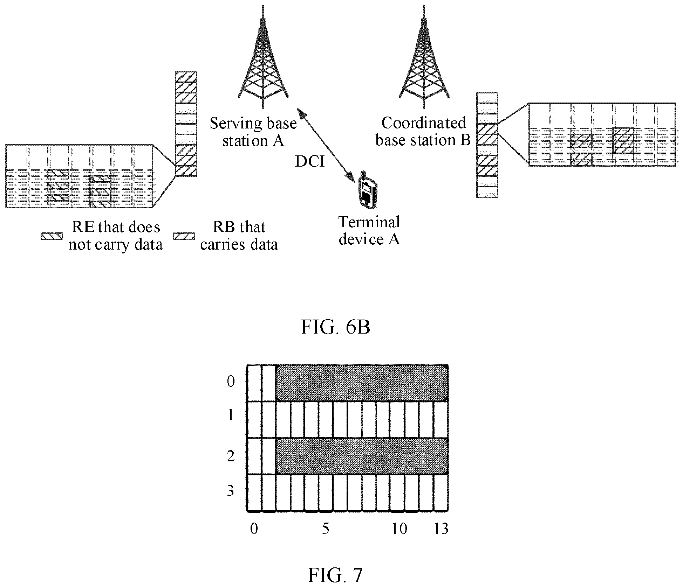

Case f: If some RSs occupy only some specific subbands, for example, some RSs occupy only a frequency domain resource whose subcarrier number is a subcarrier 5, when frequency domain resources that are allocated to the base station A and the base station B and that are used to transmit codewords are different, for example, the base station A and the base station B separately indicate, through respective DCI signaling, time-frequency resource allocation information of codewords scheduled by the base station A and the base station B, or the base station A and the base station B indicate, through one piece of DCI signaling, time-frequency resource allocation information of codewords scheduled by the two base stations, rate matching needs to be performed between the two codewords and different resources. As shown in FIG. 6B, RBs allocated to the base station A for transmitting a codeword are an RB 0 to an RB 2 and an RB 7 to an RB 9, and RBs allocated to the base station B for transmitting a codeword are an RB 2, an RB 3, an RB 5, and an RB 6. Assuming that an RS occupies only an RE corresponding to a subcarrier whose number is a subcarrier 5 and an OFDM symbol OFDM 2, a resource allocated to the base station A for transmitting a codeword includes the RS, but a resource allocated to the base station B for transmitting a codeword does not include the RS. Therefore, the base station A needs to perform rate matching on the resource occupied by the RS, but the base station B does not need to perform rate matching on the resource occupied by the RS. Therefore, the base station A and the base station B need to perform rate matching on different resources.

The base station A determines a resource set common to the codeword 0 and the codeword 1, and a resource set dedicated to the codeword 0 and the codeword 1 in the foregoing manner. For example, the first resource set (a resource set common to the codeword 0 and the codeword 1) is the ZP CSI-RS resource set 1, and the second resource set (for example, a resource set dedicated to the codeword 0) is the ZP CSI-RS resource set 2.

Step 402. The base station A sends first information and second information, and the terminal device A receives the first information and the second information.

In this embodiment of this application, the first information indicates the first resource set, and the second information indicates the second resource set.

Specifically, after determining the first resource set and the second resource set, the base station A may use higher layer signaling, for example, radio resource control (radio resource control, RRC) signaling or media access control control element (media access control control element, MAC CE) signaling, to indicate the first information and the second information to the terminal device A.

It should be noted that the first information and the second information are used to indicate only a resource included in the resource sets. It may be understood as that the first information and the second information are used to indicate only that the base station A configures, for the terminal device A, two resource sets used for rate matching: the first resource set and the second resource set, and resources included in the first resource set, and/or configuration information of the resources included in the resource sets, and resources included in the second resource set. However, the first information and the second information may not include functions of the first resource set and the second resource set, that is, a correspondence between the first resource set and the second resource set, and the N codewords, or the first information and the second information are not used to indicate, to the terminal device A, in the first resource set and the second resource set, which resource set is a resource set common to the codeword 0 and the codeword 1, and which resource set is a resource set dedicated to the codeword 0 or the codeword 1.

In addition, it should be noted that the first information and the second information may be same information, which may be understood as that one piece of information indicates the first resource set and the second resource set. Alternatively, the first information and the second information may be two different pieces of information, which may be understood as that the base station A sends two pieces of information, to indicate the first resource set and the second resource set. When the first information and the second information are two different pieces of information, a same piece of higher layer signaling may be used to send the first information and the second information, or different pieces of higher layer signaling may be used to send the first information and the second information.

Certainly, because the base station A is a serving base station, the first information and the second information may be sent by the base station A, or may be sent by the base station B controlled by the base station A. Alternatively, the base station A may send one piece of information, and the base station A may control the base station B to send the other piece of information. A specific sending manner is not limited herein.

Step 403. The terminal device A determines the first resource set and the second resource set.

That the first resource set is the ZP CSI-RS resource set 1 and the second resource set is the ZP CSI-RS resource set 2 is used as an example. After receiving the first information and the second information, the terminal device A determines, based on content indicated in the first information and the second information, that the first resource set is the ZP CSI-RS resource set 1 or a resource included in the ZP CSI-RS resource set 1, and the second resource set is the ZP CSI-RS resource set 2 or a resource included in the ZP CSI-RS resource set 2. In this way, a position of a time-frequency resource occupied by a resource in each resource set is determined.

Step 404. The base station A sends downlink control information DCI, and the terminal device A receives the DCI.

Functions of the first resource set and the second resource set are not indicated to the terminal device A in the first information and the second information. In other words, which resource set in the first resource set and the second resource set being a resource set common to the codeword 0 and the codeword 1 and which resource set being a resource set dedicated to the codeword 0 or the codeword 1 are not indicated to the terminal device A. Therefore, after indicating the first resource set and the second resource set to the terminal device A, the base station A further needs to send third information to the terminal device A. The third information indicates that the first resource set does not carry information bits included in any one of the N codewords and/or that the second resource set does not carry information bits included in some of the N codewords.

In this embodiment of this application, a field in the DCI indicates the third information. For example, one field in the DCI may be used to indicate the third information, or a plurality of fields in the DCI may be used to indicate the third information. The following separately describes manners of indicating the DCI by using an example in which one field in the DCI indicates the third information and an example in which two fields in the DCI indicate the third information.

In a first indication manner, one field in the DCI indicates the third information. That the field is a first field is used as an example. Details are as follows.

A first state value of the first field indicates that the first resource set does not carry the information bits included in the any one of the N codewords.

Alternatively, a second state value of the first field indicates that the second resource set does not carry the information bits included in the part of the N codewords.

Alternatively, a third state value of the first field indicates that the first resource set does not carry the information bits included in the any one of the N codewords and that the second resource set does not carry the information bits included in the part of the N codewords.

Alternatively, a third state value of the first field indicates that rate matching is not performed on the first resource set and the second resource set.

The first field may be used to indicate only one state value in the foregoing state values, for example, the first state value. In other words, the first field has only one state value. The first field may alternatively be used to indicate a plurality of state values in the foregoing state values. For example, the first field may be used to indicate the first state value and the second state value. For example, the first field is a 1-bit field, and the bit may have two values. When a value of the bit is "0", the first state value is indicated; when a value of the bit is "1", the second state value is indicated. Alternatively, the first field may be used to indicate the first state value, the second state value, and the third state value. For example, the first field is a 2-bit field, and the two bits may have four values: "00" to "11". In this case, three values of the four values are used to indicate the first state value, the second state value, and the third state value. Certainly, another indication manner may also be used. This is not limited herein.

Specifically, the first field is pre-agreed on by the base station A and the terminal device A, or is indicated by the base station A through the first information or the second information, or is notified by the base station A through other signaling. This is not limited herein. The following describes the indication manner by using two examples.

In a first example, the first resource set is the ZP CSI-RS resource set 1, and the second resource set is a resource set dedicated to the codeword 0 and is the ZP CSI-RS resource set 2.

Each state value in the first field may indicate at least one ZP CSI-RS resource set. For example, the first field includes two bits, so that the first field includes four state values: "00", "01", "10", and "11". AZP CSI-RS resource set indicated by each state value is pre-agreed on. For example, when a state value of the first field is "11", the state value indicates the ZP CSI-RS resource set 1. When a state value of the first field is "01", the state value indicates the ZP CSI-RS resource set 2. When a state value of the first field is "10", the state value indicates the ZP CSI-RS resource set 1 and the ZP CSI-RS resource set 2. When a state value of the first field is "00", the state value indicates that no ZP CSI-RS resource set is enabled.

Further, a mapping relationship between each state value, and a common resource set and a dedicated resource set is pre-agreed on. For example, when a state value of the first field indicates one ZP CSI-RS resource set, it indicates that a ZP CSI-RS resource set indicated by the state value is a ZP CSI-RS resource set common to the two codewords or a resource set dedicated to a part of the codewords. When a state value of the first field indicates two or more ZP CSI-RS resource sets, it indicates that one ZP CSI-RS resource set in the plurality of ZP CSI-RS resource sets indicated by the state value is a ZP CSI-RS resource set common to the two codewords, and a remaining resource set is a ZP CSI-RS resource set dedicated to a part of the two codewords. For example, a ZP CSI-RS resource set with a smaller index value is a ZP CSI-RS resource set common to the two codewords, and a ZP CSI-RS resource set with a larger index value is a ZP CSI-RS resource set dedicated to one of the two codewords.

Further, when the ZP CSI-RS resource set indicated by the state value is determined to be the ZP CSI-RS resource set common to the two codewords or the resource set dedicated to the part of the codewords, whether the ZP CSI-RS resource set indicated by the state value is the ZP CSI-RS resource set common to the two codewords or the ZP CSI-RS resource set dedicated to the part of the codewords may be distinguished based on other information of the ZP CSI-RS resource set indicated by the state value, for example, an index number or a number of the ZP CSI-RS resource set. For example, the index number is used as an example. It is pre-agreed that a ZP CSI-RS resource set whose index number is an initial value is the ZP CSI-RS resource set common to the two codewords, where for example, the initial value of the index number is 0 or 1; or that a ZP CSI-RS resource set whose index number is not an initial value is the ZP CSI-RS resource set common to the part of the codewords, where for example, the initial value of the index number is 1, and if the index number, namely, 2, of the ZP CSI-RS resource set indicated by the state value is consecutive to the initial value, the ZP CSI-RS resource set is determined to be a resource set dedicated to the codeword 0, or if the index number, for example, 3, of the ZP CSI-RS resource set indicated by the state value is inconsecutive to the initial value, the ZP CSI-RS resource set is determined to be common to a resource set dedicated to the codeword 1.

When one ZP CSI-RS resource set in the plurality of ZP CSI-RS resource sets indicated by the state value is determined to be the ZP CSI-RS resource set common to the two codewords, and a remaining resource set is the ZP CSI-RS resource set dedicated to the part of the two codewords, the common resource set and the resource set dedicated to the part of the codewords are determined and distinguished by using a predefined rule. For example, the predefined rule may be as follows: The 1st resource set in the plurality of ZP CSI-RS resource sets indicated by the state value is a common resource set, and a remaining resource set is a resource set dedicated to the part of the codewords. Whether the remaining resource set is a resource set dedicated to the codeword 0 or a resource set dedicated to the codeword 1 may be distinguished based on other information, for example, an index number or a number, of the remaining resource set. A specific distinguishing manner is the same as the foregoing manner of distinguishing whether the ZP CSI-RS resource set indicated by the state value is a ZP CSI-RS resource set common to the two codewords or a resource set dedicated to the part of the codewords. Details are not described herein again.

An indication manner of the part of the codewords is described.

Optionally, a specific indication manner in which the second resource set does not carry the part of the N codewords is that the base station further configures a quantity of codewords or an index value of a codeword in configuration information of the second resource set through higher layer signaling. In this case, the second resource set takes effect only on a codeword included in the configuration information.

Optionally, the base station further indicates, through DCI signaling, the part of the codewords corresponding to the second resource set, that is, directly indicates, in the first field, an association relationship between the second resource set and the part of the codewords (including the quantity of codewords or the index value of the codeword). In this case, the second resource set takes effect only on the codeword included in the configuration information, or the second resource set may be further enabled by using the first field.

Optionally, the base station may implicitly indicate, through DCI signaling, the part of the codewords corresponding to the second resource set. For example, it is predefined that a part of resource sets configured through higher layer signaling is the first resource set, and the rest is the second resource set. When data transmission is scheduled through two pieces of DCI, a codeword corresponding to the second resource set is a codeword enabled through the DCI through which the second resource set is enabled. When data transmission is scheduled through one piece of DCI and the DCI includes two fields used to enable a resource set, a codeword corresponding to each field is predefined. In this case, a codeword corresponding to the second resource set is a codeword corresponding to a field that enables the second resource set.

It should be noted that, in the following description, a manner of indicating the part of the codewords is the same as any one of the foregoing three manners, and details are not described below again.

In a second example, both the codeword 0 and the codeword 1 have a dedicated resource set. In this case, the second resource set configured by the base station A is a resource set in a third resource set. It may be understood as that the second resource set is a subset of the third resource set. For example, the third resource set is a resource set dedicated to the codeword 0 and a resource set dedicated to the codeword 1, and the second resource set is a resource set dedicated to the codeword 0. For example, the first resource set is the ZP CSI-RS resource set 1, the second resource set is a resource set dedicated to the codeword 0 and is the ZP CSI-RS resource set 2, and the third resource set further includes a resource set dedicated to the codeword 1 and is the ZP CSI-RS resource set 3.

Each state value in the first field may indicate at least one ZP CSI-RS resource set. For example, the first field includes one bit, so that the first field includes two state values: "0" and "1". AZP CSI-RS resource set indicated by each state value is pre-agreed on. For example, referring to Table 5, in Table 5, when a state value of the first field is "0", the state value indicates the ZP CSI-RS resource set 1; when a state value of the first field is "1", the state value indicates the ZP CSI-RS resource set 1 to the ZP CSI-RS resource set 3.

**Table 5**

| State value of indication field | Indicated ZP CSI-RS resource set |
| --- | --- |
| 1 | ZP CSI-RS resource sets 2, 1, and 3 |
| 0 | ZP CSI-RS resource set 1 |

Further, a mapping relationship between each state value, and a common resource set and a dedicated resource set is pre-agreed on. For example, when a state value of the first field indicates one ZP CSI-RS resource set, it indicates that the ZP CSI-RS resource set indicated by the state value is a ZP CSI-RS resource set common to the two codewords. When a state value of the first field indicates two or more ZP CSI-RS resource sets, it indicates that one ZP CSI-RS resource set in the plurality of ZP CSI-RS resource sets indicated by the state value is a ZP CSI-RS resource set common to the two codewords, and a remaining resource set is a ZP CSI-RS resource set dedicated to the part of the two codewords.

Further, when one ZP CSI-RS resource set in the plurality of ZP CSI-RS resource sets indicated by the state value is determined to be the ZP CSI-RS resource set common to the two codewords, and a remaining resource set is the ZP CSI-RS resource set dedicated to the part of the two codewords, the common resource set and the resource set dedicated to the part of the codewords are determined and distinguished by using a predefined rule. For example, the predefined rule may be as follows: In the plurality of ZP CSI-RS resource sets indicated by the state value, the $2^{nd}$ resource set is a common resource set, the $1^{st}$ resource set is a resource set dedicated to the codeword 0, and the $3^{rd}$ resource set is a resource set dedicated to the codeword 1. Referring to Table 5, the $2^{nd}$ resource set in Table 5 is the ZP CSI-RS resource set 1, and the resource set common to the codeword 0 and the codeword 1 is the ZP CSI-RS resource set 1 in this case; the $1^{st}$ resource set in Table 5 is the ZP CSI-RS resource set 2, and the resource set dedicated to the codeword 0 is the ZP CSI-RS resource set 2 in this case; the $3^{rd}$ resource set in Table 5 is the ZP CSI-RS resource set 3, and the resource set dedicated to the codeword 1 is the ZP CSI-RS resource set 3 in this case.

It should be noted that the foregoing two examples should not be understood as a limitation to the first indication manner in this embodiment of this application. A person skilled in the art may also provide more examples based on the foregoing two examples, and details are not described herein again.

In a second indication manner, two fields in the DCI are used to indicate the third information. That the two fields are a second field and a third field is used as an example. Details are as follows.

In a first example, the second field indicates that the first resource set does not carry information bits included in any one of the N codewords, and the third field indicates that the second resource set does not carry information bits included in a part of the N codewords.

In a second example, the second field indicates that the first resource set does not carry information bits included in any one of the N codewords, and the third field indicates that the first resource set does not carry information bits included in any one of the N codewords and that the second resource set does not carry information bits included in a part of the N codewords.

Specifically, the second field and the third field are pre-agreed on by the base station A and the terminal device A, or are indicated by the base station A through the first information or the second information, or are notified by the base station A through other signaling, for example, whether a resource set indicated by the second field and the third field is the first resource set or the second resource set is determined based on a quantity of enabled codewords. For example, when the quantity of enabled codewords is 1, both the two fields are used to indicate the first resource set; when the quantity of enabled codewords is greater than 1, one of the two fields indicates the first resource set, and the other field indicates the second resource set. Certainly, other indication manners may also be used, but are not listed one by one herein.

Further, a function of the resource set indicated by the second field and a function of the resource set indicated by the third field may also be pre-agreed on. In the first example, it is pre-agreed that the second field indicates a common resource set, the third field indicates a dedicated resource set, and a state value of each field may indicate at least one ZP CSI-RS resource set. For example, the second field is one bit, and state values of the second field include "0" and "1". When a state value of the second field is "0", the state value indicates the ZP CSI-RS resource set 1. When a state value of the first field is "1", the state value indicates the ZP CSI-RS resource set 2. Therefore, the common resource set is indicated based on the state value of the second field. An indication manner of the third field is the same as that of the second field, and details are not described herein again.

In the second example, it is pre-agreed that the second field indicates a common resource set, and the third field indicates the common resource set and a resource set dedicated to the part of the codewords. An indication manner of the second field is the same as that in the first example. For an indication manner of the third field, refer to the second example in the first indication manner. Details are not described herein again.

It should be additionally noted that the state value of the first field indicates to enable at least one resource set from the first resource set and the second resource set. Alternatively, the second field and/or the third field are/indicates to enable at least one resource set from the first resource set and the second resource set.

Specifically, when the base station A indicates the third information by using the first field, a resource set indicated by the first field is the at least one resource set that needs to be enabled by the base station A. To enable at least one resource set may be understood as enabling a function of performing rate matching in a resource set indicated by the first field, or may be understood as that rate matching needs to be performed between a to-be-transmitted codeword and a resource set indicated by the first field, or may be understood as indicating an effective time period or effective times of a resource set. For example, referring to Table 5, when the state value of the first field is 1, the state value indicates that the common resource set is the ZP CSI-RS resource set 1. In this case, the state value indicates to enable the ZP CSI-RS resource set 1 (that is, the first resource set) for rate matching. When the state value of the first field is 0, the state value indicates that the common resource set is the ZP CSI-RS resource set 1, the resource set dedicated to the codeword 0 is the ZP CSI-RS resource set 2, and the resource set dedicated to the codeword 1 is the ZP CSI-RS resource set 3. In this case, the state value indicates to enable the ZP CSI-RS resource set 1 (that is, the first resource set), the ZP CSI-RS resource set 2 (that is, the second resource set), and the ZP CSI-RS resource set 3 for rate matching. When the DCI is used to indicate to enable a resource set x, the resource set takes effect in current data transmission indicated by the DCI.

When the base station A indicates the third information by using the second field and the third field, one of the second field or the third field may be used to indicate the at least one resource set that needs to be enabled by the base station A. For example, only the second field may be used to indicate the at least one resource set that needs to be enabled, or the second field and the third field may be used together to indicate the at least one resource set that needs to be enabled by the base station A. For example, the second field indicates the ZP CSI-RS resource set 1, and the third field indicates the ZP CSI-RS resource set 2. In this case, resource sets that need to be enabled by the base station A are the ZP CSI-RS resource set 1 (that is, the first resource set) and the ZP CSI-RS resource set 2 (that is, the second resource set).

It should be noted that, if N is greater than 2, a specific indication manner is the same as a manner used when N is 2. Details are not described herein again.

Step 405. The terminal device A determines, based on the DCI, that the first resource set does not carry the information bits included in the any one of the N codewords and/or that the second resource set does not carry the information bits included in the part of the N codewords.

After receiving the DCI, the terminal device A determines the foregoing content based on a field in the DCI. Specifically, the field may be the first field in step 404, or may be the second field and the third field in step 404.

It should be noted that if the field in the DCI indicates the at least one resource set enabled by the base station A, the terminal device A may further determine, based on the field, the resource set enabled by the base station A.

Step 406. The base station A indicates at least one enabled codeword of the N codewords, and the terminal device A determines the at least one enabled codeword.

Specifically, the base station A may use one field in the DCI carrying the third information to indicate the at least one enabled codeword, for example, an enabled codeword 0, or an enabled codeword 1, or an enabled codeword 0 and codeword 1. Alternatively, the base station A may send another piece of DCI to indicate the at least one enabled codeword. This is not limited herein. The enabled codeword may be understood as a codeword needing to be transmitted by the base station A.

Step 407. The base station A sends the at least one enabled codeword, and the terminal device A receives the enabled codeword.

For example, the enabled codeword is the codeword 0, and a bit sequence of the codeword 0 is $b^{(q)}(0),...b^{(q)}(M_{\text{bit}}^{(q)}-1)$, where $M_{\text{bit}}^{(q)}$ is a quantity of bits of the codeword 0 transmitted on a PDSCH. The base station A performs an operation on the bit sequence of the codeword 0 and a scrambling sequence $c^{(q)}(i)$, to obtain a scrambled bit sequence $\tilde{b}^{(q)}(i)=(b^{(q)}(i)+c^{(q)}(i))\text{mod}2$. Then, the base station A may modulate the scrambled bit sequence $\tilde{b}^{(q)}(i)=(b^{(q)}(i)+c^{(q)}(i))\text{mode}2$ by using any one of quadrature phase shift keying (quadrature phase shift keying, QPSK), 16 quadrature amplitude modulation (quadrature amplitude modulation, QAM), 64QAM, or 256QAM, to obtain a group of complex-valued modulation symbols $d^{(q)}(0),...d^{(q)}(M_{\text{symb}}^{(q)}-1)$, and then the complex-valued modulation symbols are mapped onto one or more layers by using a layer mapping rule shown in Table 6. The complex-valued modulation symbols $d^{(q)}(0),...d^{(q)}(M_{\text{symb}}^{(q)}-1)$ are mapped onto layers $x(i)=[x^{(0)}(i) ... x^{(\upsilon-1)}(i)]^T$, where $i=0,1,...M_{\text{symb}}^{\text{layer}}-1$, v is a quantity of transmission layers, and $M_{\text{symb}}^{\text{layer}}$ is a quantity of modulation symbols per layer. As shown in Table 6, each codeword supports transmission of downlink data at a maximum of four layers, and each codeword corresponds to an independent modulation and coding scheme (modulation and coding scheme, MCS). DCI sent by the base station A to the terminal device A includes an MCS field corresponding to each codeword, and the field indicates information such as a modulation scheme, a target bit rate, and spectral efficiency information.

**Table 6**

| Quantity of layers | Quantity of codewords | Codeword-to-layer mapping $i=0,1,...,M_{\text{symb}}^{\text{layer}}-1$ | |
|---|---|---|---|
| 1 | 1 | $x^{(0)}(i)=d^{(0)}(i)$ | $M_{\text{symb}}^{\text{layer}}=M_{\text{symb}}^{(0)}$ |
| 2 | 1 | $x^{(0)}(i)=d^{(0)}(2i)$ <br> $x^{(1)}(i)=d^{(0)}(2i+1)$ | $M_{\text{symb}}^{\text{layer}}=M_{\text{symb}}^{(0)}\big/2$ |
| 3 | 1 | $x^{(0)}(i)=d^{(0)}(3i)$ <br> $x^{(1)}(i)=d^{(0)}(3i+1)$ <br> $x^{(2)}(i)=d^{(0)}(3i+2)$ | $M_{\text{symb}}^{\text{layer}}=M_{\text{symb}}^{(0)}\big/3$ |
| 4 | 1 | $x^{(0)}(i)=d^{(0)}(4i)$ <br> $x^{(1)}(i)=d^{(0)}(4i+1)$ <br> $x^{(2)}(i)=d^{(0)}(4i+2)$ <br> $x^{(3)}(i)=d^{(0)}(4i+3)$ | $M_{\text{symb}}^{\text{layer}}=M_{\text{symb}}^{(0)}\big/4$ |

(continued)

| Quantity of layers | Quantity of codewords | Codeword-to-layer mapping $i = 0,1,...,M_{symb}^{layer} - 1$ | |
|---|---|---|---|
| 5 | 2 | $x^{(0)}(i) = d^{(0)}(2i)$ <br> $x^{(1)}(i) = d^{(0)}(2i+1)$ | $M_{symb}^{layer} = M_{symb}^{(0)}\big/2 = M_{symb}^{(1)}\big/3$ |
| | | $x^{(2)}(i) = d^{(1)}(3i)$ <br> $x^{(3)}(i) = d^{(1)}(3i+1)$ <br> $x^{(4)}(i) = d^{(1)}(3i+2)$ | |
| 6 | 2 | $x^{(0)}(i) = d^{(0)}(3i)$ <br> $x^{(1)}(i) = d^{(0)}(3i+1)$ <br> $x^{(2)}(i) = d^{(0)}(3i+2)$ | $M_{symb}^{layer} = M_{symb}^{(0)}\big/3 = M_{symb}^{(1)}\big/3$ |
| | | $x^{(3)}(i) = d^{(1)}(3i)$ <br> $x^{(4)}(i) = d^{(1)}(3i+1)$ <br> $x^{(5)}(i) = d^{(1)}(3i+2)$ | |
| 7 | 2 | $x^{(0)}(i) = d^{(0)}(3i)$ <br> $x^{(1)}(i) = d^{(0)}(3i+1)$ <br> $x^{(2)}(i) = d^{(0)}(3i+2)$ | $M_{symb}^{layer} = M_{symb}^{(0)}\big/3 = M_{symb}^{(1)}\big/4$ |
| | | $x^{(3)}(i) = d^{(1)}(4i)$ <br> $x^{(4)}(i) = d^{(1)}(4i+1)$ <br> $x^{(5)}(i) = d^{(1)}(4i+2)$ <br> $x^{(6)}(i) = d^{(1)}(4i+3)$ | |
| 8 | 2 | $x^{(0)}(i) = d^{(0)}(4i)$ <br> $x^{(1)}(i) = d^{(0)}(4i+1)$ <br> $x^{(2)}(i) = d^{(0)}(4i+2)$ <br> $x^{(3)}(i) = d^{(0)}(4i+3)$ | $M_{symb}^{layer} = M_{symb}^{(0)}\big/4 = M_{symb}^{(1)}\big/4$ |
| | | $x^{(4)}(i) = d^{(1)}(4i)$ <br> $x^{(5)}(i) = d^{(1)}(4i+1)$ <br> $x^{(6)}(i) = d^{(1)}(4i+2)$ <br> $x^{(7)}(i) = d^{(1)}(4i+3)$ | |

Then, the modulation symbols $x(i)=[x^{(0)}(i) ... x^{(\upsilon-1)}(i)]^{T}$, mapped onto each layer are mapped onto antenna ports of the base station A according to Formula (1). Formula (1) is as follows:

$$
\begin{bmatrix} y^{(p_0)}(i) \\ \vdots \\ y^{(p_{\upsilon-1})}(i) \end{bmatrix} = \begin{bmatrix} x^{(0)}(i) \\ \vdots \\ x^{(\upsilon-1)}(i) \end{bmatrix} \tag{1}
$$

Finally, $y^{(p)}(0),...,y^{(p)}(M^{\mathrm{ap}}_{\mathrm{symb}}-1)$ is mapped onto a PDSCH resource allocated to the terminal device A.

When $y^{(p)}(0),...,y^{(p)}(M^{\mathrm{ap}}_{\mathrm{symb}}-1)$ is mapped onto the PDSCH resource, rate matching needs to be performed between

$y^{(p)}(0),...,y^{(p)}(M^{\mathrm{ap}}_{\mathrm{symb}}-1)$ and the at least one enabled resource set. In this case, the terminal device A receives information bits of the codeword on the corresponding PDSCH resource.

The PDSCH resource may be indicated through DCI used to carry the third information, or may be indicated through other DCI. This is not limited herein. There are two indication manners in which a frequency domain resource of the PDSCH resource allocated to the terminal device A is indicated through the DCI. A first manner is a distributed frequency domain resource indication manner. Configuration information in the indication manner includes a bitmap (bitmap) used to indicate a resource block group (resource block group, RBG) allocated to the terminal device A. For a bandwidth part (bandwidth part, BWP), the BWP is divided based on a granularity of an RBG size, and a bandwidth of each RBG size corresponds to one bit in the bitmap. A second manner is centralized frequency domain resource allocation. Configuration information in the indication manner includes a start position of a scheduled PRB and a quantity of scheduled PRBs. In this case, the scheduling manner is scheduling of continuous frequency domain resources. The configuration information in the indication manner further includes time domain resource allocation, which may be specifically indicated by using a start position of scheduled OFDM symbols and a quantity of the OFDM symbols, or may be indicated by a start position of scheduled slots (slot) and a quantity of the slots. For example, as shown in FIG. 7, a BWP includes four PRBs, an RBG size is one PRB, and the time domain resource allocation is one slot and 12 OFDM symbols. In this case, a resource corresponding to a bitmap indication" 1010" is a PDSCH resource allocated to the terminal device A.

In the foregoing technical solution, the rate matching resource (the first resource set) common to the N codewords and the rate matching resource (the second resource set) dedicated to the part of the N codewords are configured, and the common rate matching resource and the dedicated rate matching resource are separately indicated through the DCI. Therefore, repetition of indicating a same rate matching resource for the N codewords can be reduced, and a quantity of bits of an indication field used to indicate a rate matching resource during CoMP transmission can be reduced, thereby reducing overheads of indication information used to indicate the rate matching resource.

In the embodiment shown in FIG. 4, the first resource set and the second resource set that are configured by the base station for the terminal device and that are indicated through the DCI are described. The following further describes an embodiment, to describe a case in which the base station indicates the first resource set and the second resource set in another manner.

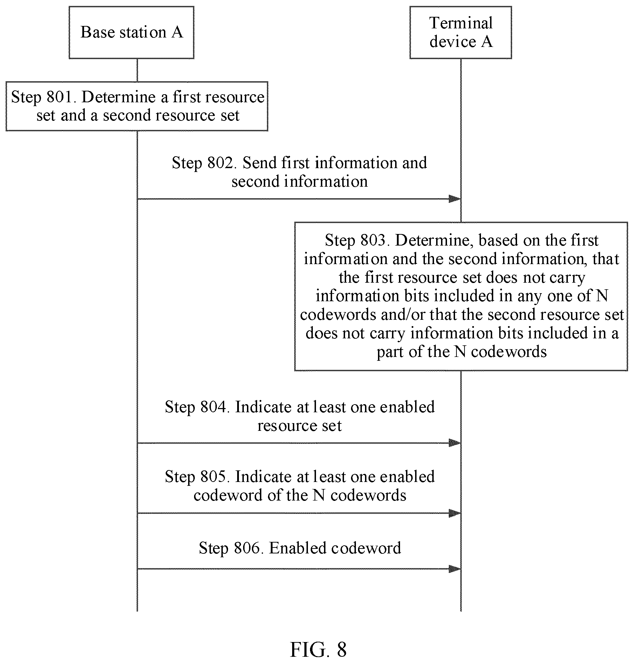

FIG. 8 is a flowchart of another resource configuration method according to this application. The following description uses an example in which the method according to this example useful for understanding the invention of this application is applied to the application scenario shown in FIG. 3A and the method is performed by the base station and the terminal device in the application scenario shown in FIG. 3A. For example, the method may be performed by a serving base station and a terminal device. In the application scenario shown in FIG. 3A, the base station A is the serving base station, and the terminal device is the terminal device A. Alternatively, the method may be performed by a serving base station, a coordinated base station, and a terminal device together. In the following description, an example in which the serving base station and the terminal device A, that is, the base station A and the terminal device A, perform the method is used for description. The flowchart is described as follows.

Step 801. The base station A determines a first resource set and a second resource set.

Step 801 is the same as step 401, and details are not described herein again.

Step 802. The base station A sends first information and second information, and the terminal device A receives the first information and the second information.

In this example useful for understanding the invention, the first information and the second information include content in the first information and the second information in step 402. In addition, the first information further includes identification information of the first resource set and identification information of N codewords, and the second information includes identification information of the second resource set and identification information of a part of the N codewords.

In this way, the base station A explicitly configures, in the first information and the second information, identification information that is of a codeword and that corresponds to each resource set, to indicate functions of the first resource set and the second resource set. Specifically, when one piece of information in the first information or the second information includes the identification information of the N codewords, it is considered that a resource set indicated by the information is a rate matching resource common to the N codewords. When one piece of information in the first information or the second information includes the identification information of the part of the N codewords, it is considered that a resource set indicated by the information is a rate matching resource dedicated to the part of the codewords.

It should be noted that identification information of the resource set may be information such as a number or an index number of the resource set, and identification information of the codeword may be an index number or a number of the codeword. For example, N is 2. The two codewords are a codeword 0 and a codeword 1. A resource set common to the two codewords is a ZP CSI-RS resource I (roman character). In this case, the first information includes three pieces of identification information A, 0, and 1. The base station A and the terminal device A pre-agree that a roman character represents a number of a resource set, and a digit represents a number of a codeword. Because the first information includes numbers of the two codewords, the resource set indicated by the first information is a resource set common to the two codewords. The identification information included in the second information is set in the same manner, and details are not described herein again.

Step 803. The terminal device A determines, based on the first information and the second information, that the first resource set does not carry information bits included in any one of the N codewords and/or that the second resource set does not carry information bits included in the part of the N codewords.

For example, the first resource set is a ZP CSI-RS resource set 1, and the second resource set is a ZP CSI-RS resource set 2. After receiving the first information and the second information, the terminal device A performs the following operation based on content in the first information and the second information: determining that the first resource set is the ZP CSI-RS resource set 1, a resource included in the ZP CSI-RS resource set 1, that the first resource set is a resource set common to the two codewords, that the second resource set is the ZP CSI-RS resource set 2, a resource included in the ZP CSI-RS resource set 2, and that the second resource set is a resource set dedicated to the part of the codewords (where when identification information of a codeword included in the second information is a number of the codeword 0, the second resource set is a resource set dedicated to the codeword 0).

Step 804. The base station A indicates at least one enabled resource set, and the terminal device determines the at least one enabled resource set.

Specifically, the base station A may indicate the at least one enabled resource set through DCI. A specific indication manner is not limited herein.

Step 805. The base station A indicates at least one enabled codeword of the N codewords, and the terminal device A determines the at least one enabled codeword.

It should be noted that step 804 and step 805 may be indicated through one piece of DCI. For example, in the DCI, one field indicates the at least one enabled resource set, and the other field indicates the at least one enabled codeword. Alternatively, two pieces of DCI may be separately used for indication. This is not limited herein.

Step 806. The base station A sends the at least one enabled codeword, and the terminal device A receives the at least one enabled codeword.

Step 806 is the same as step 407, and details are not described herein again.

In the foregoing technical solution, the base station indicates, by using the first information and the second information, a rate matching resource (the first resource set) common to the N codewords and a rate matching resource (the second resource set) dedicated to the part of the N codewords. Therefore, during CoMP transmission, a configuration status of the rate matching resource may not need to be indicated, and overheads of indication information used to indicate the rate matching resource can be reduced.

In the example useful for understanding the invention shown in FIG. 8, the first resource set and the second resource set that are explicitly configured by the base station for the terminal device are described. The following further describes an embodiment, to describe a case in which the base station indicates the first resource set and the second resource set in another manner.

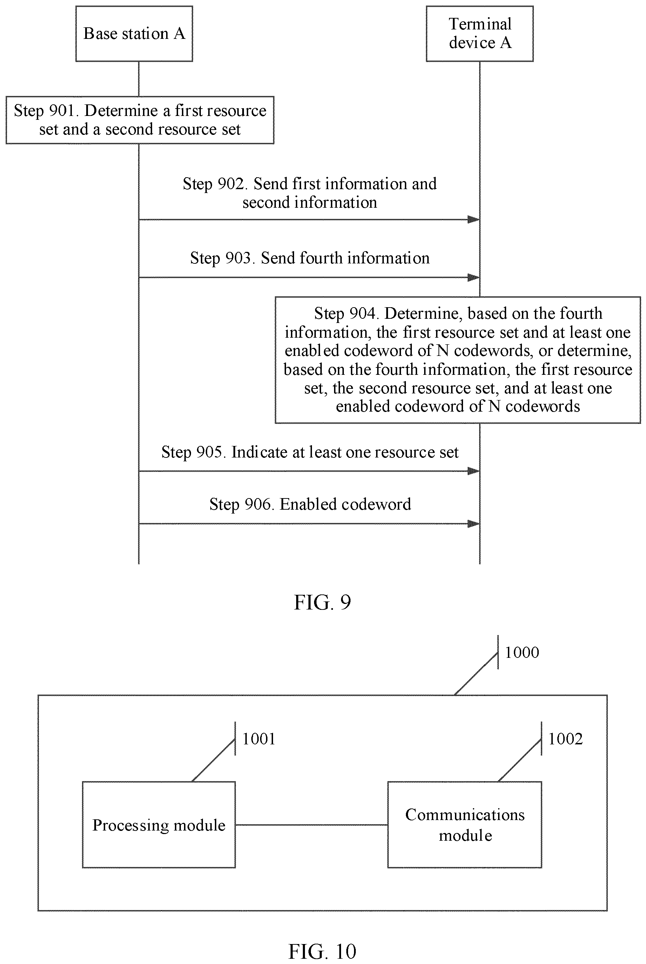

FIG. 9 is a flowchart of another resource configuration method according to this application. The following description uses an example in which the method according to this example useful for understanding the invention is applied to the application scenario shown in FIG. 3A and the method is performed by the base station and the terminal device in the application scenario shown in FIG. 3A. For example, the method may be performed by a serving base station and a terminal device. In the application scenario shown in FIG. 3A, the base station A is the serving base station, and the terminal device is the terminal device A. Alternatively, the method may be performed by a serving base station, a coordinated base station, and a terminal device together. In the following description, an example in which the serving base station and the terminal device A, that is, the base station A and the terminal device A, perform the method is used for description. The flowchart is described as follows.

Step 901. The base station A determines a first resource set and a second resource set.

Step 901 is the same as step 401, and details are not described herein again. For example, the first resource set is a ZP CSI-RS resource set 1, and the first resource set is a resource set common to two codewords (a codeword 0 and a codeword 1). The second resource set is a ZP CSI-RS resource set 2, and the second resource set is a resource set dedicated to the codeword 0.

Step 902. The base station A sends first information and second information, and the terminal device A receives the first information and the second information.

Step 902 is the same as step 402, and details are not described herein again.

Step 903. The base station A sends fourth information, and the terminal device A receives the fourth information.

In this example useful for understanding the inventionof this application, content indicated by the fourth information includes the following two types of specific content:
First type of content: The fourth information indicates the first resource set, and indicates to enable at least one of N codewords.

In this case, when the fourth information indicates the first resource set and indicates to enable one of the N codewords, the resource set indicated by the fourth information does not carry information bits included in the enabled codeword. When the fourth information indicates the first resource set and indicates to enable a plurality of codewords in the N codewords, the resource set indicated by the fourth information does not carry information bits included in any one of the plurality of enabled codewords.

For example, if the fourth information indicates the ZP CSI-RS resource set 1 and indicates to enable the codeword 0, the ZP CSI-RS resource set 1 does not carry information bits included in the codeword 0. If the fourth information indicates the ZP CSI-RS resource set 1 and indicates to enable the codeword 0 and the codeword 1, the ZP CSI-RS resource set 1 does not carry information bits included in the codeword 0, and the ZP CSI-RS resource set 1 does not carry information bits included in the codeword 1.

Second type of content: The fourth information indicates the first resource set and the second resource set, and indicates to enable at least one of the N codewords.

In this case, when the fourth information indicates the first resource set and the second resource set and indicates to enable one of the N codewords, the first resource set and the second resource set that are indicated by the fourth information do not carry information bits included in the enabled codeword. When the fourth information indicates the first resource set and the second resource set and indicates to enable a plurality of codewords in the N codewords, the first resource set indicated by the fourth information does not carry information bits included in any one of the plurality of enabled codewords, and the second resource set indicated by the fourth information does not carry information bits included in a part of the plurality of enabled codewords.

For example, if the fourth information indicates the ZP CSI-RS resource set 1 and the ZP CSI-RS resource set 2, and indicates to enable the codeword 0, neither the ZP CSI-RS resource set 1 nor the ZP CSI-RS resource set 2 carries information bits included in the codeword 0. If the fourth information indicates the ZP CSI-RS resource set 1 and the ZP CSI-RS resource set 2, and indicates to enable the codeword 0 and the codeword 1, it may be determined, according to a preset rule, which one of the ZP CSI-RS resource set 1 and the ZP CSI-RS resource set 2 is the first resource set and which one of the ZP CSI-RS resource set 1 and the ZP CSI-RS resource set 2 is the second resource set. For example, a resource set with a smallest value of identification information such as an index number or a number in the plurality of resource sets indicated by the fourth information is the first resource set, and a resource set other than the first resource set in the plurality of resource sets indicated by the fourth information is the second resource set. Therefore, it is determined that the ZP CSI-RS resource set 1 is the first resource set and the ZP CSI-RS resource set 2 is the second resource set. In this case, the ZP CSI-RS resource set 1 does not carry information bits included in the codeword 0 and information bits included in the codeword 1, and the ZP CSI-RS resource set 2 does not carry information bits included in a part of the codewords.

In this example useful for understanding the invention of this application, sending the fourth information may include but is not limited to the following two manners:
First sending manner: Send one piece of DCI, and indicate the fourth information by using a field in the piece of DCI.

Specifically, the fourth information may be indicated by using a fourth field in the DCI. The fourth field is pre-agreed on by the base station A and the terminal device A, or may be configured by the base station A.

In this case, the fourth field indicates at least one resource set and indicate to enable at least one of the N codewords. For example, the fourth field may include a plurality of state values. Some of the plurality of state values are used to indicate a codeword to be enabled, and the other state values are used to indicate a resource set. Specifically, for example, N is 2. The fourth field may include three bits. The first two bits are used to indicate a to be enabled codeword. When a state value of the first two bits is "00", the state value indicates to enable the codeword 0. When a state value of the first two bits is "01", the state value indicates to enable the codeword 1. When a state value of the first two bits is "10", the state value indicates to enable the codeword 0 and the codeword 1. The last bit of the fourth field indicates a resource set, and each state value of the last bit may indicate at least one resource set. For example, when a state value of the last bit is "0", the state value indicates the ZP CSI-RS resource set 1 and the ZP CSI-RS resource set 2. When a state value of the last bit is "1", the state value indicates the ZP CSI-RS resource set 1. When the last bit indicates one resource set, the resource set indicated by the last bit is the first resource set. When the last bit indicates a plurality of resource sets, the resource sets indicated by the last bit are the first resource set and the second resource set.

Alternatively, all state values may be used to indicate to enable a codeword and indicate a corresponding resource set. For example, when the DCI indicates to enable one of the N codewords, the resource set indicated by the fourth field does not carry information bits included in the enabled codeword. For example, when a state value of the fourth field is "00", the state value indicates to enable the codeword 0, and indicate the ZP CSI-RS resource set 1. In this case, the ZP CSI-RS resource set 1 does not carry information bits included in the codeword 0. When the DCI indicates to enable a plurality of codewords in the N codewords, the first resource set indicated by the fourth field does not carry information bits included in each of the plurality of enabled codewords, and the second resource set indicated by the fourth field does not carry information bits included in a part of the plurality of enabled codewords. For example, when a state value of the fourth field is "01", the state value indicates to enable the codeword 0 and the codeword 1, and indicate the ZP CSI-RS resource set 1 and ZP CSI-RS resource set 2. In this case, it may be determined, according to a preset rule, which resource set of the ZP CSI-RS resource set 1 and the ZP CSI-RS resource set 2 is the first resource set. The preset rule may be determining values of index numbers of a plurality of indicated resource sets. A resource set with a smaller index number is the first resource set, and a resource set with a larger index number is the second resource set. In this case, the ZP CSI-RS resource set 1 does not carry information bits included in the codeword 0 and the codeword 1. The ZP CSI-RS resource set 2 does not carry information bits included in the codeword 1.

When the fourth information is indicated by using fields in the one piece of DCI, two fields may also be used for indication. A fifth field in the DCI indicates the first resource set, and a sixth field in the DCI indicates the second resource set. The fifth field and the sixth field are pre-agreed on by the base station A and the terminal device A, or may be configured by the base station A. In addition, a function of the resource set indicated by the fifth field and a function of the resource set indicated by the sixth field may also be pre-agreed on by the base station A and the terminal device A or configured by the base station A.

A manner in which the fifth field and the sixth field indicate the resource sets may be the same as a manner in which the fourth field indicates a resource set, that is, a state value of the fifth field and a state value of the sixth field may be used to indicate different resource sets. Details are not described herein again. One of the fifth field or the sixth field may be used to indicate to enable at least one codeword, or the fifth field and the sixth field may be used together to indicate to enable a codeword. For example, the fifth field indicates to enable the codeword 0, and the sixth field indicates to enable the codeword 1, indicating that codewords to be enabled by the base station A are the codeword 0 and the codeword 1. A manner in which the fifth field and/or the sixth field indicates to enable at least one codeword is the same as a manner in which the fourth field indicates to enable at least one codeword, and details are not described herein again.

When the DCI indicates to enable one of the N codewords, the resource sets indicated by the fifth field and the sixth field do not carry information bits included in the enabled codeword. Alternatively, when the DCI indicates to enable one of the N codewords, the resource set indicated by the fifth field does not carry information bits included in the enabled codeword. Alternatively, when the DCI indicates to enable a plurality of codewords in the N codewords, the resource set indicated by the fifth field does not carry information bits included in each of the plurality of enabled codewords, and the resource set indicated by the sixth field does not carry information bits included in a part of the plurality of enabled codewords.

Second sending manner: Send two pieces of DCI, and indicate the fourth information by using fields in the two pieces of DCI. It should be noted that sending the two pieces of DCI may be that the base station A sends content of one piece of DCI to a base station B, and then the base station B sends the DCI. Alternatively, a center controller performs unified scheduling and then sends a scheduling policy to the base station A and the base station B. Then, the base station A and the base station B separately indicate the DCI. The two pieces of DCI have independent time-frequency resource configurations, and/or have independent terminal device blind detection manners. The terminal device blind detection manner includes a blind detection periodicity, a blind detection DCI format, a DCI type (common DCI or terminal device-specific DCI), a quantity of blind detection times, an aggregation level, and the like.

Specifically, first DCI in the two pieces of DCI indicates the first resource set and used to indicate to enable a first codeword in the N codewords, and second DCI in the two pieces of DCI indicates the second resource set and used to indicate to enable a second codeword in the N codewords.

In this case, functions of the first DCI and the second DCI may be agreed on by the base station A and the terminal device A, or may be configured by the base station A. The function of the first DCI or the function of the second DCI may be understood as whether a resource set indicated in the first DCI or the second DCI is the first resource set or the second resource set. A manner in which the first DCI indicates the first resource set or the second DCI indicates the second resource set is the same as a manner in which one piece of DCI indicates the resource set in the first sending manner, and details are not described herein again.

It should be noted that the resource set indicated by the first DCI does not carry information bits included in either of the first codeword and the second codeword, and the resource set indicated by the second DCI does not carry information bits included in the first codeword or the second codeword.

In addition, when N is greater than 2, the first codeword may be M codewords in the N codewords, and the second codeword may be K codewords in the N codewords, where M and K are positive integers less than or equal to N. In this case, the resource set indicated by the first DCI does not carry information bits included in any one of the M codewords and the K codewords, and the resource set indicated by the second DCI does not carry information bits included in any one of the K codewords. Alternatively, the resource set indicated by the first DCI does not carry information bits included in any one of the M codewords and the K codewords, and the resource set indicated by the second DCI does not carry information bits included in a part of the M codewords and the K codewords. For example, if the base station A includes identification information of the first resource set and identification information of the N codewords to the first information, and includes identification information of the second resource set and identification information of a part of the N codewords to the second information, a meaning of the identification information is the same as that in step 802. For example, the first information carries identification information of a codeword 0, a codeword 1, and a codeword 2, and the second information carries identification information of the codeword 0 and the codeword 1. In this case, when the enabled M codewords indicated by the first DCI are the codeword 0 and the codeword 2, and the enabled K codewords indicated by the second DCI are the codeword 1, the resource set indicated in the second DCI does not carry information bits included in the codeword 0 and the codeword 1, that is, the resource set indicated in the second DCI does not carry information bits included in the part of the M codewords and the K codewords.

When the fourth information is indicated by using the fields in the two pieces of DCI, the following case is further included:

The second resource set is a resource set in a third resource set. It may be understood that the third resource set includes a resource set dedicated to each of the N codewords, and the second resource set is a resource set dedicated to a part of the codewords. For example, the N codewords are a codeword 0 and a codeword 1. The third resource set includes a resource set dedicated to the codeword 0 and a resource set dedicated to the codeword 1. The second resource set is the resource set dedicated to the codeword 0.

In this case, the first DCI in the two pieces of DCI indicates the first resource set and the second resource set, and indicates to enable a first codeword in the N codewords, and the second DCI in the two pieces of DCI indicates at least one resource set other than the second resource set in the third resource set and used to indicate to enable a second codeword in the N codewords.

It should be noted that a manner in which the first DCI indicates the first resource set and the second resource set is the same as a manner in which one piece of DCI indicates the fourth information in the first sending manner, and details are not described herein again.

In this case, the first resource set indicated by the first DCI does not carry information bits included in either of the first codeword and the second codeword, and the second resource set indicated by the first DCI and the resource set indicated by the second DCI do not carry information bits included in a part of the first codeword and the second codeword. Alternatively, neither the first resource set nor the second resource set indicated by the first DCI carries information bits included in either of the first codeword and the second codeword, and the resource set indicated by the second DCI does not carry information bits included in the second codeword.

In addition, when N is greater than 2, the first codeword may be M codewords in the N codewords, and the second codeword may be K codewords in the N codewords, where M and K are positive integers less than or equal to N. In this case, the first resource set indicated by the first DCI does not carry information bits included in any one of the M codewords and the K codewords, and the second resource set indicated by the first DCI and the resource set indicated by the second DCI do not carry information bits included in a part of the M codewords and the K codewords. Alternatively, the first resource set and the second resource set that are indicated by the first DCI do not carry information bits included in any one of the M codewords and the K codewords, and the resource set indicated by the second DCI does not carry information bits included in the K codewords.

In addition, in this example useful for understanding the invention of this application, the fourth information indicates a transmission mode of the N codewords.

In this example useful for understanding the invention of this application, the transmission mode includes a first transmission mode and a second transmission mode. Information bits in the N codewords are the same in the first transmission mode, and information bits in the N codewords are different in the second transmission mode.

Specifically, the first transmission mode includes a single base station transmission mode or diversity transmission (diversity transmission) that is based on spatial multiplexing. The single base station transmission mode is a transmission mode in which one terminal device can communicate with only one base station at a time, and may be understood as a transmission mode in the prior art described in the background. The diversity transmission mode means that two base stations in a coordinating cluster use different transmission manners, for example, use different precoding manners, use different transmit power, or use different transmit beams, to send a same codeword. The second transmission mode may also be understood as non-coherent joint transmission (non-coherent joint transmission, NC-JT). To be specific, a plurality of base stations in a coordinating cluster simultaneously transmit codewords to a terminal device, and independent precoding is performed for antennas of the plurality of base stations, that is, each base station independently selects an optimal precoding matrix to perform joint phase and amplitude weighting between the antennas of the base station.

A manner in which the fourth information indicates the transmission mode of the N codewords is as follows: When a quantity of enabled codewords indicated by the fourth information is greater than 1 and only the first resource set is enabled, or resource sets enabled for two codewords are the same, the transmission mode is indicated to be the first transmission mode. When a quantity of enabled codewords indicated by the fourth information is greater than 1 and both the first resource set and the second resource set are enabled, the transmission mode is indicated to be the second transmission mode.

It should be noted that the single base station transmission mode and the diversity transmission mode that are included in the first transmission mode may be distinguished by using another field in the DCI, and for example, may be determined by using a quantity of MCS/new data indicator (new data indicator, NDI)/redundancy version (redundancy version, RV) fields in the DCI, a port number indicated by a DM-RS port indication field, and the like. For example, when to use the single base station transmission mode and when to use the diversity transmission mode are determined. For example, all orthogonal DM-RS ports are classified into a port set 1 and a port set 2. When the DM-RS port indication field indicates the port set 1, the single base station transmission mode is used. When the DM-RS port indication field indicates the port set 1 and the port set 2, the diversity transmission mode is used. When the quantity of enabled codewords is less than a predefined value, the single base station transmission mode is used. When the quantity of enabled codewords is greater than a predefined value, the diversity transmission mode is used.

Step 904. The terminal device A determines, based on the fourth information, the first resource set and the at least one enabled codeword of N codewords, or the terminal device A determines, based on the fourth information, the first resource set, the second resource set, and the at least one enabled codeword of the N codewords.

Certainly, if the fourth information indicates the transmission mode, after receiving the fourth information, the terminal device A further needs to determine the transmission mode of the N codewords.

A manner of determining the foregoing content by the terminal device A and a manner of indicating the foregoing content by the base station A in step 903 are reciprocal processes, and details are not described herein again.

Step 905. The base station A indicates at least one enabled resource set, and the terminal device determines the at least one enabled resource set.

Specifically, the base station A may indicate the at least one enabled resource set through DCI. A specific indication manner is not limited herein.

Step 906. The base station A sends the enabled codeword, and the terminal device A receives the enabled codeword.

Step 906 is the same as step 407, and details are not described herein again.

It should be noted that, if the base station A indicates the transmission mode of the N codewords, for the diversity transmission mode and the NC-JT transmission mode, behavior of receiving an enabled codeword by the terminal device A is different. Specifically, for the diversity transmission mode, the terminal device A combines codewords from different base stations, obtains information bits, and feeds back hybrid automatic repeat request (hybrid automatic repeat request, HARQ) information, to notify the base station A whether the codeword is correctly received. However, for the NC-JT transmission mode, the terminal device A does not combine codewords from different base stations, but separately obtains information bits from the codewords received by the base stations, and separately feeds back HARQ information to the base stations.

In the foregoing embodiments provided in this application, the methods provided in the embodiments of this application are separately described from perspectives of the network device, the terminal device, and interaction between the network device and the terminal device. To implement functions in the foregoing methods provided in the embodiments of this application, the network device and the terminal device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

FIG. 10 is a schematic structural diagram of a communications apparatus 1000. The communications apparatus 1000 may be a terminal device, and can implement a function of the terminal device in the method provided in the embodiments of this application. Alternatively, the communications apparatus 1000 may be an apparatus that can support a terminal device in implementing a function of the terminal device in the method provided in the embodiments of this application. The communications apparatus 1000 may be a hardware structure, a software module, or a combination of a hardware structure and a software module. The communications apparatus 1000 may be implemented by a chip system. In this embodiment of this application, the chip system may include a chip, or may include a chip and another discrete component.

The communications apparatus 1000 may include a processing module 1001 and a communications module 1002.

The processing module 1001 may be configured to perform step 403 and step 405 in the embodiment shown in FIG. 4, or configured to perform step 803 in the embodiment shown in FIG. 8, or configured to perform step 904 in the embodiment shown in FIG. 9, and/or configured to support another process of the technology described in this specification. The communications module 1002 is configured to implement communication between the communications apparatus 1000 and another module, and may be a circuit, a component, an interface, a bus, a software module, a transceiver, or any other apparatus that can implement communication.

The communications module 1002 may be configured to perform step 402, step 404, step 406, and step 407 in the embodiment shown in FIG. 4, or configured to perform step 802 and step 804 to step 806 in the embodiment shown in FIG. 8, or configured to perform step 902, step 903, step 905, and step 906 in the embodiment shown in FIG. 9, and/or configured to support another process of the technology described in this specification.

All related content of steps in the foregoing method embodiments may be cited in function descriptions of corresponding functional modules, and details are not described herein.

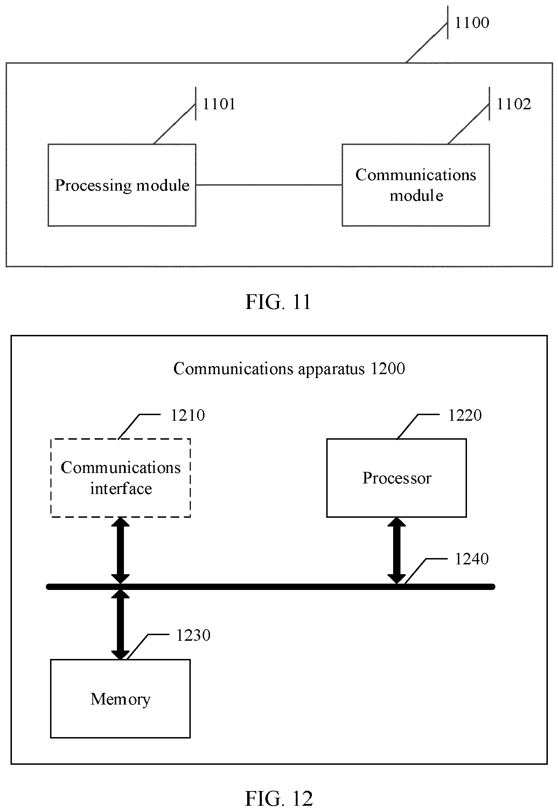

FIG. 11 is a schematic structural diagram of a communications apparatus 1100. The communications apparatus 1100 may be a network device, and can implement a function of the network device in the method provided in the embodiments of this application. Alternatively, the communications apparatus 1100 may be an apparatus that can support a terminal device in implementing a function of the network device in the method provided in the embodiments of this application. The communications apparatus 1100 may be a hardware structure, a software module, or a combination of a hardware structure and a software module. The communications apparatus 1100 may be implemented by a chip system. In this embodiment of this application, the chip system may include a chip, or may include a chip and another discrete component.

The communications apparatus 1100 may include a processing module 1101 and a communications module 1102.

The processing module 1101 may be configured to perform step 401 in the embodiment shown in FIG. 4, or configured to perform step 801 in the embodiment shown in FIG. 8, or configured to perform step 901 in the embodiment shown in FIG. 9, and/or configured to support another process of the technology described in this specification. The communications module 1102 is configured to implement communication between the communications apparatus 1100 and another module, and may be a circuit, a component, an interface, a bus, a software module, a transceiver, or any other apparatus that can implement communication.

The communications module 1102 may be configured to perform step 402, step 404, step 406, and step 407 in the embodiment shown in FIG. 4, or configured to perform step 802 and step 804 to step 806 in the embodiment shown in FIG. 8, or configured to perform step 902, step 903, step 905, and step 906 in the embodiment shown in FIG. 9, and/or configured to support another process of the technology described in this specification.

All related content of steps in the foregoing method embodiments may be cited in function descriptions of corresponding functional modules, and details are not described herein.

Division into modules in this embodiment of this application is an example, is merely logical function division, and may be other division during actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

FIG. 12 shows a communications apparatus 1200 according to an embodiment of this application. The communications apparatus 1200 may be the terminal device in the embodiment shown in FIG. 4, FIG. 8, or FIG. 9, and can implement a function of the terminal device in the method provided in the embodiments of this application. Alternatively, the communications apparatus 1200 may be an apparatus that can support a terminal device in implementing a function of the terminal device in the method provided in the embodiments of this application. The communications apparatus 1200 may be a chip system. In this embodiment of this application, the chip system may include a chip, or may include a chip and another discrete component.

The communications apparatus 1200 includes at least one processor 1220, configured to implement or support the communications apparatus 1200 in implementing the function of the terminal device in the method provided in the embodiments of this application. For example, the processor 1220 may determine the first resource set and the second resource set based on the first information and the second information. For details, refer to detailed descriptions in the method examples. Details are not described herein again.

The communications apparatus 1200 may further include at least one memory 1230, configured to store program instructions and/or data. The memory 1230 is coupled to the processor 1220. Couplings in the embodiments of this application are indirect couplings or communication connections between apparatuses, units, or modules, may be in an electrical form, a mechanical form, or another form, and are used for information exchange between the apparatuses, the units, or the modules. The processor 1220 may operate in collaboration with the memory 1230. The processor 1220 may execute the program instructions stored in the memory 1230. At least one of the at least one memory may be included in the processor.

The communications apparatus 1200 may further include a communications interface 1210, configured to communicate with another device through a transmission medium, so that an apparatus in the communications apparatus 1200 can communicate with the another device. For example, the another device may be a network device. The processor 1220 may send and receive data through the communications interface 1210.

A specific connection medium between the communications interface 1210, the processor 1220, and the memory 1230 is not limited in this embodiment of this application. In this embodiment of this application, in FIG. 12, the memory 1230, the processor 1220, and the communications interface 1210 are connected by using a bus 1240. The bus is represented by a thick line in FIG. 12. A connection manner between other components is merely an example for description, and is not limited thereto. The bus may be classified into an address bus, a data bus, a control bus, and the like. For ease of representation, only one thick line is used for representation in FIG. 12, but this does not mean that there is only one bus or only one type of bus.

In this embodiment of this application, the processor 1220 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to the embodiments of this application may be directly performed by a hardware processor, or may be performed by using a combination of hardware in the processor and a software module.

In this embodiment of this application, the memory 1230 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store program instructions and/or data.

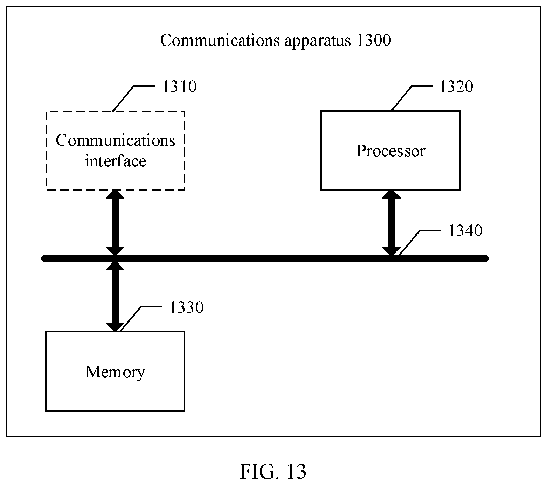

FIG. 13 shows a communications apparatus 1300 according to an embodiment of this application. The communications apparatus 1300 may be a network device, and can implement a function of the network device in the method provided in this embodiment of this application. Alternatively, the communications apparatus 1300 may be an apparatus that can support a core network element in implementing the function of the network device in the method provided in the embodiments of this application. The communications apparatus 1300 may be a chip system. In this embodiment of this application, the chip system may include a chip, or may include a chip and another discrete component.

The communications apparatus 1300 includes at least one processor 1320, configured to implement or support the communications apparatus 1300 in implementing a function of the core network element in the method provided in the embodiments of this application. For example, the processor 1320 may determine a first resource set and a second resource set. For details, refer to detailed descriptions in the method examples. Details are not described herein again.

The communications apparatus 1300 may further include at least one memory 1330, configured to store program instructions and/or data. The memory 1330 is coupled to the processor 1320. Couplings in the embodiments of this application are indirect couplings or communication connections between apparatuses, units, or modules, may be in an electrical form, a mechanical form, or another form, and are used for information exchange between the apparatuses, the units, or the modules. The processor 1320 may operate in collaboration with the memory 1330. The processor 1320 may execute the program instructions stored in the memory 1330. At least one of the at least one memory may be included in the processor.

The communications apparatus 1300 may further include a communications interface 1310, configured to communicate with another device through a transmission medium, so that an apparatus in the apparatus 1300 can communicate with the another device. For example, the another device may be a terminal device. The processor 1320 may send and receive data through the communications interface 1310.

A specific connection medium between the communications interface 1310, the processor 1320, and the memory 1330 is not limited in this embodiment of this application. In this embodiment of this application, in FIG. 13, the memory 1330, the processor 1320, and the communications interface 1310 are connected by using a bus 1340. The bus is represented by a thick line in FIG. 13. A connection manner between other components is merely an example for description, and is not limited thereto. The bus may be classified into an address bus, a data bus, a control bus, and the like. For ease of representation, only one thick line is used for representation in FIG. 13, but this does not mean that there is only one bus or only one type of bus.

In the embodiments of this application, the processor 1320 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to the embodiments of this application may be directly performed by a hardware processor, or may be performed by using a combination of hardware in the processor and a software module.

In this embodiment of this application, the memory 1330 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store program instructions and/or data.

An embodiment of this application further provides a computer-readable storage medium, including instructions. When the instructions are run on a computer, the computer is enabled to perform the method performed by the terminal device in any one of the embodiments in FIG. 4, FIG. 8, and FIG. 9.

An embodiment of this application further provides a computer-readable storage medium, including instructions. When the instructions are run on a computer, the computer is enabled to perform the method performed by the network device in any one of the embodiments in FIG. 4, FIG. 8, and FIG. 9.

An embodiment of this application further provides a computer program product, including instructions. When the computer program product runs on a computer, the computer is enabled to perform the method performed by the terminal device in any one of the embodiments in FIG. 4, FIG. 8, and FIG. 9.

An embodiment of this application further provides a computer program product, including instructions. When the computer program product runs on a computer, the computer is enabled to perform the method performed by the network device in any one of the embodiments in FIG. 4, FIG. 8, and FIG. 9.

An embodiment of this application provides a chip system. The chip system includes a processor, may further include a memory, and is configured to implement a function of the terminal device in the foregoing methods. The chip system may include a chip, or may include a chip and another discrete component.

An embodiment of this application provides a chip system. The chip system includes a processor, may further include a memory, and is configured to implement a function of the network device in the foregoing methods. The chip system may include a chip, or may include a chip and another discrete component.

An embodiment of this application provides a system. The system includes the foregoing terminal device and network device.

All or some of the foregoing methods in the embodiments of this application may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, a network device, user equipment, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims

## Claims

1. A resource configuration method, comprising:

    determining (401) a first resource set and a second resource set, wherein the first resource set does not carry information bits comprised in any one of N codewords, and the second resource set does not carry information bits comprised in a part of the N codewords, wherein N is an integer greater than or equal to 2, wherein that the first resource set does not carry information bits comprised in any one of N codewords specifically comprises: when a resource used to carry the any one of the N codewords overlaps with any resource element, RE in the first resource set, the overlapped RE does not carry the information bits comprised in the any one of the N codewords; and that the second resource set does not carry information bits comprised in a part of the N codewords specifically comprises: when a resource used to carry the part of the N codewords overlaps with any RE in the second resource set, the overlapped RE does not carry the information bits comprised in the part of the N codewords; and
    sending (402) first information and second information, wherein the first information indicates configuration information of the first resource set, and the second information indicates configuration information of the second resource set, wherein the method further comprises:

sending third information, wherein the third information indicates that the first resource set does not carry the information bits comprised in the any one of the N codewords and/or that the second resource set does not carry the information bits comprised in the part of the N codewords, wherein the sending third information comprises:

sending (404) downlink control information, DCI, wherein a second field and a third field in the DCI are used to indicate the third information, wherein
the second field indicates that the first resource set does not carry the information bits comprised in the any one of the N codewords; and
the third field indicates that the second resource set does not carry the information bits comprised in the part of the N codewords; or the third field indicates that the first resource set does not carry the information bits comprised in the any one of the N codewords and that the second resource set does not carry the information bits comprised in the part of the N codewords,
wherein a resource in the first resource set or the second resource set is used to carry a common reference signal of a cell or a resource in the first resource set or the second resource set is used for channel estimation.

2. A resource configuration method, comprising:

receiving (402) first information and second information, wherein the first information indicates a first resource set, the second information indicates a second resource set, the first resource set does not carry information bits comprised in any one of N codewords, and the second resource set does not carry information bits comprised in a part of the N codewords, wherein N is an integer greater than or equal to 2, wherein
that the first resource set does not carry information bits comprised in any one of N codewords specifically comprises: when a resource used to carry the any one of the N codewords overlaps with any resource element, RE in the first resource set, the overlapped RE does not carry the information bits comprised in the any one of the N codewords; and that the second resource set does not carry information bits comprised in a part of the N codewords specifically comprises: when a resource used to carry the part of the N codewords overlaps with any RE in the second resource set, the overlapped RE does not carry the information bits comprised in the part of the N codewords; and
determining (403) the first resource set and the second resource set, wherein the method further comprises:
receiving third information, wherein the third information indicates that the first resource set does not carry the information bits comprised in the any one of the N codewords and/or that the second resource set does not carry the information bits comprised in the part of the N codewords, wherein the receiving third information comprises:

receiving (404) downlink control information, DCI, wherein a second field and a third field in the DCI are used to indicate the third information, wherein
the second field indicates that the first resource set does not carry the information bits comprised in the any one of the N codewords; and
the third field indicates that the second resource set does not carry the information bits comprised in the part of the N codewords; or the third field indicates that the first resource set does not carry the information bits comprised in the any one of the N codewords and that the second resource set does not carry the information bits comprised in the part of the N codewords,
wherein a resource in the first resource set or the second resource set is used to carry a common reference signal of a cell or a resource in the first resource set or the second resource set is used for channel estimation.

3. A computer program product, wherein the computer program product stores a computer program, the computer program comprises program instructions, and when the program instructions are executed by a computer, the computer is enabled to perform the method according to any one of claims 1 or 2.

**Patentansprüche**

1. Ressourcenkonfigurationsverfahren, umfassend:

Bestimmen (401) eines ersten Ressourcensatzes und eines zweiten Ressourcensatzes, wobei der erste Ressourcensatz keine Informationsbits trägt, die in einem von N Codewörtern enthalten sind, und der zweite Ressourcensatz keine Informationsbits trägt, die in einem Teil der N Codewörter enthalten sind, wobei N eine ganze Zahl größer als oder gleich 2 ist, wobei

dass der erste Ressourcensatz keine Informationsbits trägt, die in einem beliebigen von N Codewörtern enthalten sind, insbesondere umfasst: wenn eine Ressource, die verwendet wird, um das eine beliebige der N Codewörter zu tragen, mit einem beliebigen Ressourcenelement (RE) in dem ersten Ressourcensatz überlappt, das überlappende RE die Informationsbits nicht trägt, die in dem einen beliebigen der N Codewörter enthalten sind; und dass der zweite Ressourcensatz keine Informationsbits trägt, die in einem Teil der N Codewörter enthalten sind, insbesondere umfasst: wenn eine Ressource, die verwendet wird, um den Teil der N Codewörter zu tragen, mit einem RE in dem zweiten Ressourcensatz überlappt, das überlappende RE die Informationsbits nicht trägt, die in dem Teil der N Codewörter enthalten sind; und

Senden (402) von ersten Informationen und zweiten Informationen, wobei die ersten Informationen Konfigurationsinformationen des ersten Ressourcensatzes angeben und die zweiten Informationen Konfigurationsinformationen des zweiten Ressourcensatzes angeben, wobei das Verfahren ferner umfasst:

Senden von dritten Informationen, wobei die dritten Informationen angeben, dass der erste Ressourcensatz die Informationsbits nicht trägt, die in dem einen beliebigen der N Codewörter enthalten sind, und/oder dass der zweite Ressourcensatz die Informationsbits nicht trägt, die in dem Teil der N Codewörter enthalten sind, wobei das Senden von dritten Informationen umfasst:

Senden (404) von Downlink-Steuerinformationen (DCI), wobei ein zweites Feld und ein drittes Feld in den DCI verwendet werden, um die dritten Informationen anzugeben, wobei

das zweite Feld angibt, dass der erste Ressourcensatz die Informationsbits nicht trägt, die in dem einen beliebigen der N Codewörter enthalten sind; und

das dritte Feld angibt, dass der zweite Ressourcensatz die Informationsbits nicht trägt, die in dem Teil der N Codewörter enthalten sind; oder das dritte Feld angibt, dass der erste Ressourcensatz die Informationsbits nicht trägt, die in dem einen beliebigen der N Codewörter enthalten sind, und dass der zweite Ressourcensatz die Informationsbits nicht trägt, die in dem Teil der N Codewörter enthalten sind,

wobei eine Ressource in dem ersten Ressourcensatz oder dem zweiten Ressourcensatz verwendet wird, um ein gemeinsames Referenzsignal einer Zelle zu tragen, oder eine Ressource in dem ersten Ressourcensatz oder dem zweiten Ressourcensatz für eine Kanalschätzung verwendet wird.

2. Ressourcenkonfigurationsverfahren, umfassend:

Empfangen (402) von ersten Informationen und zweiten Informationen, wobei die ersten Informationen einen ersten Ressourcensatz angeben, die zweiten Informationen einen zweiten Ressourcensatz angeben, wobei der erste Ressourcensatz keine Informationsbits trägt, die in einem beliebigen von N Codewörtern enthalten sind, und der zweite Ressourcensatz keine Informationsbits trägt, die in einem Teil der N Codewörter enthalten sind, wobei N eine ganze Zahl größer als oder gleich 2 ist, wobei

dass der erste Ressourcensatz keine Informationsbits trägt, die in einem beliebigen von N Codewörtern enthalten sind, insbesondere umfasst: wenn eine Ressource, die verwendet wird, um das eine beliebige der N Codewörter zu tragen, mit einem beliebigen Ressourcenelement (RE) in dem ersten Ressourcensatz überlappt, das überlappende RE die Informationsbits nicht trägt, die in dem einen beliebigen der N Codewörter enthalten sind; und dass der zweite Ressourcensatz keine Informationsbits trägt, die in einem Teil der N Codewörter enthalten sind, insbesondere umfasst: wenn eine Ressource, die verwendet wird, um den Teil der N Codewörter zu tragen, mit einem RE in dem zweiten Ressourcensatz überlappt, das überlappende RE die Informationsbits nicht trägt, die in dem Teil der N Codewörter enthalten sind; und

Bestimmen (403) des ersten Ressourcensatzes und des zweiten Ressourcensatzes, wobei das Verfahren ferner umfasst:

Empfangen von dritten Informationen, wobei die dritten Informationen angeben, dass der erste Ressourcensatz die Informationsbits nicht trägt, die in dem einen beliebigen der N Codewörter enthalten sind, und/oder dass der zweite Ressourcensatz die Informationsbits nicht trägt, die in dem Teil der N Codewörter enthalten sind, wobei das Empfangen von dritten Informationen umfasst:

Empfangen (404) von Downlink-Steuerinformationen (DCI), wobei ein zweites Feld und ein drittes Feld in den DCI verwendet werden, um die dritten Informationen anzugeben, wobei

das zweite Feld angibt, dass der erste Ressourcensatz die Informationsbits nicht trägt, die in dem einen beliebigen der N Codewörter enthalten sind; und

das dritte Feld angibt, dass der zweite Ressourcensatz die Informationsbits nicht trägt, die in dem Teil der N Codewörter enthalten sind; oder das dritte Feld angibt, dass der erste Ressourcensatz die Informationsbits nicht trägt, die in dem einen beliebigen der N Codewörter enthalten sind, und dass der zweite Ressourcensatz die Informationsbits nicht trägt, die in dem Teil der N Codewörter enthalten sind, wobei eine Ressource in dem ersten Ressourcensatz oder dem zweiten Ressourcensatz verwendet wird, um ein gemeinsames Referenzsignal einer Zelle zu tragen, oder eine Ressource in dem ersten Ressourcensatz oder dem zweiten Ressourcensatz für eine Kanalschätzung verwendet wird.

**3.** Computerprogrammprodukt, wobei das Computerprogrammprodukt ein Computerprogramm speichert, wobei das Computerprogramm Programmanweisungen umfasst und wenn die Programmanweisungen durch einen Computer ausgeführt werden, der Computer aktiviert wird, das Verfahren nach einem der Ansprüche 1 bis 2 durchzuführen.

**Revendications**

**1.** Procédé de configuration de ressources, comprenant :

la détermination (401) d'un premier ensemble de ressources et d'un second ensemble de ressources, le premier ensemble de ressources ne transportant pas de bits d'informations compris dans l'un quelconque des N mots de code, et le second ensemble de ressources ne transportant pas de bits d'informations compris dans une partie des N mots de code, N étant un entier supérieur ou égal à 2,
le fait que le premier ensemble de ressources ne transporte pas de bits d'informations compris dans l'un quelconque des N mots de code comprenant spécifiquement : lorsqu'une ressource utilisée pour transporter l'un quelconque des N mots de code chevauche un élément de ressource, RE dans le premier ensemble de ressources, le RE chevauché ne transportant pas les bits d'informations compris dans l'un quelconque des N mots de code ; et le fait que le second ensemble de ressources ne transporte pas de bits d'informations compris dans une partie des N mots de code comprenant spécifiquement : lorsqu'une ressource utilisée pour transporter la partie des N mots de code chevauche un RE quelconque dans le second ensemble de ressources, le RE chevauché ne transportant pas les bits d'informations compris dans la partie des N mots de code ; et
l'envoi (402) de premières informations et de deuxièmes informations, les premières informations indiquant des informations de configuration du premier ensemble de ressources, et les deuxièmes informations indiquant des informations de configuration du second ensemble de ressources, le procédé comprenant en outre :
l'envoi de troisièmes informations, les troisièmes informations indiquant que le premier ensemble de ressources ne transporte pas les bits d'informations compris dans l'un quelconque des N mots de code et/ou que le second ensemble de ressources ne transporte pas les bits d'informations compris dans la partie des N des mots de code, les troisièmes informations d'envoi comprenant :

l'envoi (404) d'informations de commande de liaison descendante, DCI, un deuxième champ et un troisième champ dans le DCI étant utilisés pour indiquer les troisièmes informations,
le deuxième champ indiquant que le premier ensemble de ressources ne transporte pas les bits d'informations compris dans l'un quelconque des N mots de code ; et
le troisième champ indiquant que le second ensemble de ressources ne transporte pas les bits d'informations compris dans la partie des N mots de code ; ou le troisième champ indiquant que le premier ensemble de ressources ne peut pas accéder aux bits d'informations compris dans l'un quelconque des N mots de code et que le second ensemble de ressources ne transporte pas les bits d'informations compris dans la partie des N mots de code,
une ressource dans le premier ensemble de ressources ou le second ensemble de ressources étant utilisée pour transporter un signal de référence commun d'une cellule ou une ressource dans le premier ensemble de ressources ou le second ensemble de ressources étant utilisée pour l'estimation de canal.

**2.** Procédé de configuration de ressources, comprenant :

la réception (402) des premières informations et des deuxièmes informations, les premières informations indiquant un premier ensemble de ressources, les deuxièmes informations indiquant un second ensemble de ressources, le premier ensemble de ressources ne transportant pas de bits d'information compris dans l'un quelconque des N mots de code, et la seconde ressource l'ensemble ne pouvant pas contenir les bits d'information compris dans une partie des N mots de code, N étant un entier supérieur ou égal à 2,
le fait que le premier ensemble de ressources ne transporte pas de bits d'informations compris dans l'un quelconque des N mots de code comprenant spécifiquement : lorsqu'une ressource utilisée pour transporter l'un quelconque des N mots de code chevauche un élément de ressource, RE dans le premier ensemble de ressources, le RE chevauché ne transportant pas les bits d'informations compris dans l'un quelconque des N mots de code ; et le fait que le second ensemble de ressources ne transporte pas de bits d'informations compris dans une partie des N mots de code comprenant spécifiquement : lorsqu'une ressource utilisée pour transporter la partie des N mots de code chevauche un RE quelconque dans le second ensemble de ressources, le RE chevauché ne transportant pas les bits d'informations compris dans la partie des N mots de code ; et

la détermination (403) du premier ensemble de ressources et du second ensemble de ressources, le procédé comprenant en outre :

la réception de troisièmes informations, les troisièmes informations indiquant que le premier ensemble de ressources ne transporte pas les bits d'informations compris dans l'un quelconque des N mots de code et/ou que le second ensemble de ressources ne transporte pas les bits d'informations compris dans la partie des N des mots de code, les troisièmes informations de réception comprenant :

la réception (404) d'informations de commande de liaison descendante, DCI, un deuxième champ et un troisième champ dans le DCI étant utilisés pour indiquer les troisièmes informations,

le deuxième champ indiquant que le premier ensemble de ressources ne transporte pas les bits d'informations compris dans l'un quelconque des N mots de code ; et

le troisième champ indiquant que le second ensemble de ressources ne transporte pas les bits d'informations compris dans la partie des N mots de code ; ou le troisième champ indiquant que le premier ensemble de ressources ne transporte pas les bits d'informations compris dans l'un quelconque des N mots de code et que le second ensemble de ressources ne transporte pas les bits d'informations compris dans la partie des N mots de code,

une ressource dans le premier ensemble de ressources ou le second ensemble de ressources étant utilisée pour transporter un signal de référence commun d'une cellule ou une ressource dans le premier ensemble de ressources ou le second ensemble de ressources étant utilisée pour l'estimation de canal.

3. Support de stockage lisible par ordinateur, dans lequel le support de stockage stocke un programme informatique, le programme informatique comprend des instructions de programme, et lorsque les instructions de programme sont exécutées par un ordinateur, l'ordinateur est en mesure d'effectuer le procédé selon l'une quelconque des revendications 1 à 2.

FIG. 1

FIG. 2

FIG. 3A

FIG. 3B

FIG. 3C

| Base station A | | Terminal device A |
|---|---|---|

Step 401. Determine a first resource set and a second resource set

Step 402. Send first information and second information

Step 403. Determine the first resource set and the second resource set

Step 404. Send DCI

Step 405. Determine, based on the DCI, that the first resource set does not carry information bits included in any one of N codewords and/or that the second resource set does not carry information bits included in a part of the N codewords

Step 406. Indicate at least one enabled codeword of the N codewords

Step 407. Enabled codeword

FIG. 4

FIG. 5A(a)

FIG. 5A(b)

FIG. 5A(c)

f/subcarrier

Subcarrier 4
Subcarrier 3
Subcarrier 2
Subcarrier 1
Subcarrier 0

OFDM 0  OFDM 1  OFDM 2

t/OFDM symbol

NZP CSI-RS 1    ZP CSI-RS 1
NZP CSI-RS 2    ZP CSI-RS 1
NZP CSI-RS 3    Codeword 0
NZP CSI-RS 4    Codeword 1

FIG. 5B(d)

f/subcarrier

Subcarrier 4
Subcarrier 3
Subcarrier 2
Subcarrier 1
Subcarrier 0

OFDM 0  OFDM 1  OFDM 2

t/OFDM symbol

FIG. 5B(e)

f/subcarrier

Subcarrier 4
Subcarrier 3
Subcarrier 2
Subcarrier 1
Subcarrier 0

OFDM 0  OFDM 1  OFDM 2

t/OFDM symbol

FIG. 5B(f)

Serving base
station A

Coordinated
base station B

DCI

Terminal
device A

RE that does
not carry data

RB that
carries data

FIG. 6A

37

| | RE that does not carry data | | RB that carries data |

Serving base station A

Coordinated base station B

DCI

Terminal device A

FIG. 6B

FIG. 7

Base station A

Terminal device A

Step 801. Determine a first resource set and a second resource set

Step 802. Send first information and second information

Step 803. Determine, based on the first information and the second information, that the first resource set does not carry information bits included in any one of N codewords and/or that the second resource set does not carry information bits included in a part of the N codewords

Step 804. Indicate at least one enabled resource set

Step 805. Indicate at least one enabled codeword of the N codewords

Step 806. Enabled codeword

FIG. 8

```
┌─────────────────┐                              ┌─────────────┐
│ Base station A  │                              │  Terminal   │
│                 │                              │  device A   │
└────────┬────────┘                              └──────┬──────┘
         │                                              │
┌────────┴────────────────────────┐                     │
│ Step 901. Determine a first     │                     │
│ resource set and a second       │                     │
│ resource set                    │                     │
└────────┬────────────────────────┘                     │
         │  Step 902. Send first information and         │
         │             second information               │
         ├─────────────────────────────────────────────►│
         │     Step 903. Send fourth information         │
         ├─────────────────────────────────────────────►│
         │                    ┌─────────────────────────┴─────────┐
         │                    │ Step 904. Determine, based on the │
         │                    │ fourth information, the first     │
         │                    │ resource set and at least one     │
         │                    │ enabled codeword of N codewords,  │
         │                    │ or determine, based on the fourth │
         │                    │ information, the first resource   │
         │                    │ set, the second resource set, and │
         │                    │ at least one enabled codeword of  │
         │                    │ N codewords                       │
         │                    └─────────────────────────┬─────────┘
         │   Step 905. Indicate at least one resource set│
         ├─────────────────────────────────────────────►│
         │        Step 906. Enabled codeword             │
         ├─────────────────────────────────────────────►│
```

FIG. 9

```
                                                    1000
        ┌─────────────────────────────────────────────────┐
        │                                                  │
        │      1001                         1002           │
        │  ┌──────────────┐          ┌──────────────┐      │
        │  │  Processing  │──────────│Communications│      │
        │  │   module     │          │    module    │      │
        │  └──────────────┘          └──────────────┘      │
        │                                                  │
        └──────────────────────────────────────────────────┘
```

FIG. 10

1100

Processing module  1101

Communications module  1102

**FIG. 11**

Communications apparatus 1200

Communications interface  1210

Processor  1220

1240

1230

Memory

**FIG. 12**

Communications apparatus 1300

1310

Communications
interface

1320

Processor

1340

1330

Memory

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3641251 A1

- EP 2850908 A1

**Non-patent literature cited in the description**

- **QUALCOMM INCORPORATED.** Enhancement to control signaling for NCJT. *3GPP DRAFT; RI-1708791 ENHANCEMENT TO CONTROL SIGNALING FOR NCJT, 3RD GENERATION PARTNERSHIP PROJECT (3GPP), PDSCH RE*